# EUROPEAN PATENT APPLICATION

(11) **EP 4 746 475 A1**
(43) Date of publication of application: **20.05.2026**
(21) Application number: 23944750.1
(22) Date of filing: 13.07.2023
(51) Int. Cl.: H04W 12/06

(54) **COMMUNICATION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Stöckeler, Ferdinand
(86) International application number: PCT/CN2023/107313
(87) International publication number: WO 2025/010737

(57) **Abstract**

Embodiments of the present disclosure provide a communication method and apparatus, a communication device, a communication system, and a storage medium. The communication method comprises: a first device receiving a first signal of a second device; under the excitation of the first signal, performing secure communication with the second device on the basis of a first configuration.

## Description

### TECHNICAL FIELD

The disclosure relates to the field of wireless communication technologies, in particular to a communication method and a communication apparatus, a communication device, a communication system and a storage medium.

### BACKGROUND

Internet of Things (IoT) devices are generally defined as low-power devices, enabling them to operate for long periods without being recharged or requiring battery replacement. However, regardless of how much power usage is minimized, battery life is ultimately limited. Once the battery is depleted, the IoT devices will cease functioning, thereby impacting users. With technology advancement, a mechanism based on backscatter communication has been introduced. In this way, IoT devices can perform reflective communication by utilizing the signal energy emitted by other devices.

### SUMMARY

With the development of technologies, the issue of improving the security of backscatter communications has been raised.

The embodiments of the disclosure provide a communication method and a communication apparatus, a communication device and a storage medium.

In a first aspect, the embodiments of the disclosure provide a communication method. The method includes:
receiving, by a first device, a first signal from a second device; and
upon being triggered by the first signal, performing a secure communication with the second device based on a first configuration.

In a second aspect, the embodiments of the disclosure provide a communication method. The method includes:
receiving, by a second device, a second configuration, in which the second configuration is used for a secure communication between the second device and a first device; and
sending a first signal to the first device, in which the first signal is used for triggering the first device to communicate with the second device.

In a third aspect, the embodiments of the disclosure provide a communication method. The method includes:
sending by a first core network device a second configuration to a second device, in which the second configuration is used for a secure communication between the second device and a first device, and the first device is triggered to communicate by a signal from the second device.

In a fourth aspect, the embodiments of the disclosure provide a communication method. The method includes:
sending, by an application server, a second configuration to a second device or a core network device, in which the second configuration is used for a secure communication between the second device and a first device, and the first device is triggered to communicate by a signal from the second device.

In a fifth aspect, the embodiments of the disclosure provide a communication method. The method includes:
performing, by a first device, the communication method provided by any one of the technical solutions in the first aspect;
performing, by a second device, the communication method provided by any one of the technical solutions in the second aspect;
performing, by a first core network device, the communication method provided by any one of the technical solutions in the third aspect; and
performing, by an application server, the communication method provided by any one of the technical solutions in the fourth aspect.

In a sixth aspect, the embodiments of the disclosure provide a first device. The first device includes:
a receiving module, configured to receive a first signal from a second device; and
a transceiver module, configured to, upon being triggered by the first signal, perform a secure communication with the second device based on a first configuration.

In a seventh aspect, the embodiments of the disclosure provide a second device. The second device includes:
a receiving module, configured to receive a second configuration, in which the second configuration is used for a secure communication between the second device and a first device; and
a sending module, configured to send a first signal to the first device, in which the first signal is used to excite communications between the first device and the second device.

In an eighth aspect, the embodiments of the disclosure provide a first core network device. The first core network device includes:
a sending module, configured to send a second configuration to a second device, in which the second configuration is used for a secure communication between the second device and a first device, and the first device is triggered to communicate by a signal form the second device.

In a ninth aspect, the embodiments of the disclosure provide an application server. The application server includes:
a sending module, configured to send a second configuration to a second device or a core network device, in which the second configuration is used for a secure communication between the second device and a first device, and the first device is triggered to communicate by a signal form the second device.

In a tenth aspect, the embodiments of the disclosure provide a communication device. The communication device includes:
one or more processors;
in which the one or more processors are configured to call instructions to cause the communication device to implement the communication method of the first aspect, the communication method of the second aspect, or the communication method of the third aspect.

In an eleventh aspect, the embodiments of the disclosure provide a storage medium. The storage medium stores instructions, and when the instructions are executed by a communication device, the communication device is caused to implement the communication method of the first aspect, the communication method of the second aspect, or the communication method of the third aspect.

The technical solutions provided by the embodiments of the disclosure guarantee the security of communications between the first device and the second device.

It should be understood that both the above general descriptions and the following detailed descriptions are exemplary and explanatory only, and are not intended to limit the embodiments of the disclosure.

### BRIEF DESCRIPTION OF THE DRAWINGS

The accompanying drawings, which are incorporated in and constitute a part of the specification, illustrate embodiments consistent with the disclosure and together with the specification, serve to explain the principles of the embodiments of the disclosure.
FIG. 1A is a schematic structural diagram of a communication system illustrated according to an example embodiment.
FIG. 1B is a schematic diagram of wireless communication based on a backscatter communication mechanism illustrated according to an example embodiment.
FIG. 1C is a topological schematic diagram of wireless communication based on a backscatter communication mechanism illustrated according to an example embodiment.
FIG. 1D is a schematic diagram of wireless communication based on a backscatter communication mechanism illustrated according to an example embodiment.
FIG. 1E is a topological schematic diagram of wireless communication based on a backscatter communication mechanism illustrated according to an example embodiment.
FIG. 1F is a topological schematic diagram of wireless communication based on a backscatter communication mechanism illustrated according to an example embodiment.
FIG. 1G is a schematic diagram of three devices for wireless communication based on a backscatter communication mechanism illustrated according to an example embodiment.
FIG. 2A is a schematic flowchart of a communication method illustrated according to an example embodiment.
FIG. 2B is a schematic flowchart of a communication method illustrated according to an example embodiment.
FIG. 2C is a schematic flowchart of a communication method illustrated according to an example embodiment.
FIG. 2D is a schematic flowchart of a communication method illustrated according to an example embodiment.
FIG. 2E is a schematic flowchart of a communication method illustrated according to an example embodiment.
FIG. 2F is a schematic flowchart of a communication method illustrated according to an example embodiment.
FIG. 3 is a schematic flowchart of a communication method illustrated according to an example embodiment.
FIG. 4 is a schematic flowchart of a communication method illustrated according to an example embodiment.
FIG. 5 is a schematic flowchart of a communication method illustrated according to an example embodiment.
FIG. 6 is a schematic flowchart of a communication method illustrated according to an example embodiment.
FIG. 7 is a schematic flowchart of a communication method illustrated according to an example embodiment.
FIG. 8A is a schematic structural diagram of a first device illustrated according to an example embodiment.
FIG. 8B is a schematic structural diagram of a second device illustrated according to an example embodiment.
FIG. 8C is a schematic structural diagram of a first core network device illustrated according to an example embodiment.
FIG. 8D is a schematic structural diagram of an application server illustrated according to an example embodiment.
FIG. 9A is a schematic structural diagram of a terminal illustrated according to an example embodiment.
FIG. 9B is a schematic structural diagram of a communication device illustrated according to an example embodiment.

### DETAILED DESCRIPTION

The embodiments of the disclosure provide a communication method and a communication apparatus, a communication device, a communication system and a storage medium.

In a first aspect, the embodiments of the disclosure provide a communication method. The method includes:
receiving, by a first device, a first signal from a second device; and
upon being triggered by the first signal, performing a secure communication with the second device based on a first configuration.

Based on the above solution, the first device performs a secure communication with the second device based on the excitation of the first signal. This mitigates communication security issues arising from the absence of protective securing between the first device and the second device, thereby enhancing communication security.

In combination with some embodiments of the first aspect, the first configuration includes first security information, and the first security information includes a first key.

Based on the above solution, the first configuration includes the security information, and the security information at least includes the first key. This enables the protection of communications between the first device and the second device based on the first key.

In combination with some embodiments of the first aspect, upon being triggered by the first signal, performing the secure communication with the second device based on the first configuration includes:
upon being triggered by the first signal, performing the secure communication with the second device based on the first key included in the security information;
   or
upon being triggered by the first signal, generating a second key based on the first key, and performing the secure communication with the second device based on the second key.

Based on the above solution, the secure communication between the first device and the second device is carried out directly based on the first key included in the security information. It has the characteristics of being easy to implement and is in line with the simple structure of the first device. Or, the communication between the first device and the second device is performed based on a derived key from the first key included in the security information, which improves the security of the communication between the first device and the second device.

In combination with some embodiments of the first aspect, the first signal is securely protected, and performing the secure communication with the second device based on the first configuration includes:
performing a security authentication on the first signal based on the first configuration; and
upon the first signal passing the security authentication, sending first information securely-protected to the second device based on the first configuration, in which the first information is used for a security authentication between the second device and the first device.

Based on the above solution, the first signal is securely protected. Thus, from the initial message exchanged between the first device and the second device, secure communication between the first device and the second device is achieved.

In combination with some embodiments of the first aspect, the first signal is not securely protected, and performing the secure communication with the second device based on the first configuration includes:
upon being triggered by the first signal, sending second information securely-protected to the second device based on the first configuration, in which the second information is used for a security authentication between the second device and the first device.

Based on the above solution, the first signal is not securely protected. That is, the first signal is unencrypted, the integrity of the first signal is unprotected, or the first signal is uninterrupted. In this case, the first device is triggered by the first signal to send the second information. The second information is at least used by the second device for a security authentication on the first device, thereby ensuring the security of the first device's uplink communication.

In combination with some embodiments of the first aspect, performing the secure communication with the second device based on the first configuration includes:
receiving a second signal, in which the second device is securely authenticated, and the second signal is securely protected;
performing a security authentication on the second signal based on the first configuration; and
upon the second signal passing the security authentication, sending third information securely-protected based on the first configuration.

Based on the above solution, the first device receives the second signal. Since the second signal is securely protected, downlink security authentication of the first device to the second device is realized through the second signal, thereby ensuring downlink transmission security of the first device.

In combination with some embodiments of the first aspect, performing the secure communication with the second device based on the first configuration includes:
upon being triggered by the first signal, sending fourth information, in which the fourth information is used for requesting a security authentication;
receiving a third signal sent by the second device, in which the third signal is securely protected;
performing the security authentication on the third signal based on the first configuration; and
upon the third signal passing the security authentication, sending fifth information securely-protected to the second device based on the first configuration.

Based on the above solution, the first signal is not securely authenticated, after receiving the first signal, the first device sends the fourth information under the excitation of the first signal. The fourth information is used to request a security authentication. In this case, the first device will receive the third signal that is securely protected, so as to realize uplink transmission security of the first device to the second device based on the third signal.

In some embodiments, the fifth information is securely protected, so the fifth information can be used for the security protection of the second device to the first device.

In some embodiments, the first key includes at least one of:
an integrity key for integrity protection;
a confidentiality key for confidentiality protection;
a scrambling key for scrambling protection; or
a password for encoding protection.

Based on the above solution, there are different types of first key, so that different types of security protection can be realized as required, which improves the flexibility of communication security protection between the first device and the second device.

In a second aspect, a communication method is provided. The method includes:
receiving, by a second device, a second configuration, in which the second configuration is used for a secure communication between the second device and a first device; and
sending a first signal to the first device, in which the first signal is used for triggering the first device to communicate with the second device.

Based on the above solution, the second device receives the second configuration, which is used to realize the secure communication between the first device and the second device.

In combination with some embodiments of the second aspect, receiving by the second device the second configuration includes:
receiving the second configuration from an application server;
   or
receiving the second configuration from a core network device.

Based on the above solution, the second configuration may come from the application server or the core network device. Therefore, two ways to obtain the second configuration are provided for selection.

In combination with some embodiments of the second aspect, the method includes:
sending a first request message to the application server or the core network device, in which the first request message is used for requesting the second configuration;
receiving by the second device the second configuration including:
receiving a first response message including the second configuration from the application server or the core network device, in which the second device is authenticated and authorized by the application server or the core network device.

Based on the above solution, the second device receives the second configuration from the core network device and/or the application server by sending the first request message. Therefore, the second device can request the second configuration from the core network device and/or the application server according to its own requirements, thereby reducing unnecessary configuration request and/or transmission.

In some embodiments, the second configuration at least includes second security information, and the second security information includes a third key.

In combination with some embodiments of the second aspect, the method further includes: perform a secure communication with the second device using the third key.

Based on the above solution, the use of the third key directly ensures the security between the first device and the second device, which is easy to implement.

In combination with some embodiments of the second aspect, the method further includes: generating a fourth key based on the third key; and performing a secure communication with the second device using the fourth key.

Based on the above solution, in embodiments of the disclosure, the fourth key is generated based on the third key, so that different fourth keys can be derived based on the same third key for secure communications, thereby further improving the communication security.

In combination with some embodiments of the second aspect, the first signal is securely protected for a security authentication between the first device and the second device,
the method further includes: receiving first information returned by the first device under the excitation of the first signal, in which the first information is securely protected, and is security authenticated based on the second configuration.

Based on the above solution, the first signal is securely protected, so that the first signal is used at least for the second device to perform the security authentication on the first device. After the first device receives the first signal, under the excitation of the first signal, it sends the first information that is securely protected, which facilitates the first device to perform the security authentication on the second device.

In combination with some embodiments of the second aspect, the first signal is not securely protected,
and the method further includes: receiving second information from the second device upon its being triggered by the first signal, in which the second information is securely protected, and is security authenticated based on the second configuration.

Based on the above solution, the first signal is not securely protected. After receiving the first signal, the first device sends the second information that is securely protected under the excitation of the first signal. Consequently, the second device first performs secure authentication on the first device.

In combination with some embodiments of the second aspect, the method further includes:
sending a second signal, in which the second signal is securely protected and is for a security authentication between the first device and the second device; and
upon the second signal passing the security authentication, receiving third information from the second device upon its being triggered by the second signal, in which the third information is securely protected.

Based on the above solution, since the first signal is not securely protected and the second signal is securely protected, the first device performs security authentication on the first device based on the second signal. After the second device passing the security authentication, the security authentication on the first device is performed upon the first device being triggered by the second signal.

In combination with some embodiments of the second aspect, the first signal is not securely protected,
the method further includes:
receiving fourth information from the second device upon its being triggered by the first signal, in which the fourth information is used for requesting a security authentication;
sending a third signal based on the fourth information, in which the third signal is securely protected; and
upon the third signal passing the securely authentication, receiving fifth information from the second device upon its being triggered by the third signal.

In a third aspect, a communication method is provided. The method includes:
sending, by a first core network device, a second configuration to a second device, in which the second configuration is used for a secure communication between the second device and a first device, and the first device is triggered to communicate by a signal form the second device.

In combination with some embodiments of the third aspect, the method further includes:
performing an authentication and authorization on the second device;
sending the second configuration to the second device including:
upon the second device passing the authentication and authorization, sending the second configuration to the second device.

In combination with some embodiments of the third aspect, performing the authentication and authorization on the second device includes:
sending a second request message to a second core network device or an application server, in which the second core network device stores contract data of the second device;
receiving a second response message returned based on the second request message; and
determining whether the second device passes the authentication and authorization based on the second response message.

In combination with some embodiments of the third aspect, the second device is authenticated and authorized by the application server, and the second response message further includes the second configuration.

In combination with some embodiments of the third aspect, the method further includes:
receiving a first request message, in which the first request message is used for requesting the second configuration;
sending, by the first core network device, the second configuration to the second device including:
sending a first response message including the second configuration to the second device.

In combination with some embodiments of the third aspect, the second configuration at least includes a third key of second security information.

In combination with some embodiments of the third aspect, the method further includes:
sending a third request message to an application server, in which the third request message is used for requesting the second configuration; and
receiving a third response message returned by the application server, in which the third response message includes the second configuration.

In a fourth aspect, a communication method is provided. The method includes:
sending, by an application server, a second configuration to a second device or a core network device, in which the second configuration is used for a secure communication between the second device and a first device, and the first device is triggered to communicate by a signal sent from the second device.

In combination with some embodiments of the fourth aspect, sending, by the application server, the second configuration to the second device includes:
upon the second device passing an authentication and authorization, sending the second configuration to the second device.

In combination with some embodiments of the fourth aspect, the method further includes:
receiving a first request message sent by the second device, in which the first request message is used for requesting the second configuration;
sending, by the application server, the second configuration to the second device or the core network device including:
sending a first response message including the second configuration to the second device.

In combination with some embodiments of the fourth aspect, the method further includes:
receiving a third request message sent by the core network device, in which the third request message is used for requesting the second configuration; and
sending a third response message to the core network device, in which the third response message includes the second configuration.

In combination with some embodiments of the fourth aspect, the method further includes:
receiving a second request message sent by the core network device, in which the second request message is at least used for an authentication and authorization on the second device; and
upon the second device passing the authentication and authorization, sending a second response message to the core network device, in which the second response message includes the second configuration.

In a fifth aspect, a communication method is provided. The method includes:
performing, by a first device, the communication method provided by any one of the technical solutions in the first aspect;
performing, by a second device, the communication method provided by any one of the technical solutions in the second aspect;
performing, by a first core network device, the communication method provided by any one of the technical solutions in the third aspect; and
performing, by an application server, the communication method provided by any one of the technical solutions in the fourth aspect.

In a sixth aspect, a first device is provided. The first device includes:
a receiving module, configured to receive a first signal from a second device; and
a transceiver module, configured to, upon being triggered by the first signal, perform a secure communication with the second device based on a first configuration.

In a seventh aspect, a second device is provided. The second device includes:
a receiving module, configured to receive a second configuration, in which the second configuration is used for a secure communication between the second device and a first device; and
a sending module, configured to send a first signal to the first device, in which the first signal is used for triggering the first device to communicate with the second device.

In an eighth aspect, a first core network device is provided. The first core network device includes:
a sending module, configured to send a second configuration to a second device, in which the second configuration is used for a secure communication between the second device and a first device, and the first device is triggered to communicate by a signal from the second device.

In a ninth aspect, an application server is provided. The application server includes:
a sending module, configured to send a second configuration to a second device or a core network device, in which the second configuration is used for a secure communication between the second device and a first device, and the first device is triggered to communicate by a signal sent from the second device.

In a tenth aspect, a communication system is provided. The communication system includes:
a first device, configured to implement the communication method provided by any one of the technical solutions in the first aspect;
a second device, configured to implement the communication method provided by any one of the technical solutions in the second aspect;
a first core network device, configured to implement the communication method provided by any one of the technical solutions in the third aspect; and
an application server, configured to implement the communication method provided by any one of the technical solutions in the fourth aspect.

In an eleventh aspect, the embodiments of the disclosure provide a communication device. The communication device includes:
one or more processors;
in which the one or more processor is configured to call instructions to cause the communication device to implement the communication method described in the optional implementations of the first aspect, the communication method described in the optional implementations of the second aspect, or the communication method described in the optional implementations of the third aspect.

In a twelfth aspect, the embodiments of the disclosure provide a storage medium. The storage medium stores instructions, and when the instructions are executed by a communication device, the communication device is caused to implement the communication method described in the optional implementations of the first aspect, the communication method described in the optional implementations of the second aspect, or the communication method described in the optional implementations of the third aspect.

In a thirteenth aspect, the embodiments of the disclosure provide a program product. When program product is executed by a communication device, the communication device is caused to implement the communication method described in the optional implementations of the first aspect, the communication method described in the optional implementations of the second aspect, or the communication method described in the optional implementations of the third aspect.

In a fourteenth aspect, the embodiments of the disclosure provide a computer program. When the computer program is executed by a computer, the computer is caused to implement the communication method described in the optional implementations of the first aspect, the communication method described in the optional implementations of the second aspect, or the communication method described in the optional implementations of the third aspect.

It is understood that the first device, the second device, the core network device, the communication device, the communication system, the storage medium, the program product and the computer program are all used for implementing the methods provided by the embodiments of the disclosure. The beneficial effects they achieve can refer to the beneficial effects in the corresponding methods, which will not be repeated here.

The embodiments of the disclosure provide a communication method and a communication apparatus, a communication device, a communication system and a storage medium. In some embodiments, terms such as "communication method", "information processing method" and "communicating method" are interchangeable. Terms such as "information indicating device", "information processing device" and "information transmission device" are interchangeable. Moreover, terms such as "communication system" and "information processing system" are interchangeable.

The embodiments of the disclosure are not exhaustive, but only schematic illustrations of some embodiments, and are not taken as specific limitations on the protection scope of the disclosure. Without contradiction, in an embodiment, each step may be implemented as an independent embodiment, and steps may be combined arbitrarily. For example, the solution after removing some steps in an embodiment may also be implemented as an independent embodiment. The steps in an embodiment may be performed in different orders, and optional implementations in an embodiment may be combined arbitrarily. In addition, the embodiments of the disclosure may also be combined arbitrarily. For example, some or all steps of different embodiments may be combined arbitrarily, and each embodiment may be arbitrarily combined with optional implementations of other embodiments.

In the embodiments of the disclosure, unless there are special explanations and logical conflicts, terms and/or descriptions of the embodiments are consistent and can refer to each other, and technical features in different embodiments may be combined as a new embodiment according to their inherent logical relations.

The terms used in the embodiments of the disclosure are only for the purpose of describing specific embodiments, and are not used as limitations of the disclosure.

In the embodiments of the disclosure, unless otherwise specified, an element expressed in a singular form through terms such as "a", "an" "the" "the above", "said", "the above described", "this" and so on, is interpreted as that there is "one and only one", "one or more" or "at least one" of the element. For example, when an article, e.g., "a", "an" or "the" in English, is used in translation, a noun after the article can be interpreted in a singular form or in a plural form.

In the embodiments of the disclosure, "a plurality of" refers to "two or more".

In some embodiments, the terms "at least one of", "one or more", "a plurality of" and "multiple" are interchangeable.

In some embodiments, "at least one of A or B", "A and/or B", "in one case A, while in another case B", and "in response to one case A, while in response to another case B" may be used in the following technical solutions depends on the specific condition: in some embodiments, A is executed independent of B; in some embodiments, B is executed independent of A; in some embodiments, A and B are selectively executed; and in some embodiments, A and B are both executed. The same applies when there are more branches such as A, B and C.

In some embodiments, "A or B" may be used in the following technical solutions depends on the condition: in some embodiments, A is executed independent of B; in some embodiments, B is executed independent of A; and in some embodiments, A and B are selectively executed. The same applies when there are more branches such as A, B and C.

The prefixes such as "first" and "second" in the embodiments of the disclosure are only used to distinguish different objects, and the prefix is not intended to limit the position, order, priority, quantity or content of a certain object. The description of the object can refer to the descriptions of the claims or the embodiments, and should not constitute unnecessary limitations because of the use of prefix. For example, when describing a "field", the prefixes "first" and "second" in "first field" and "second field" do not indicate the positions or orders of the two fields or whether the "first field" and "second field" are in the same message or not, nor do they define the sequence of the "first field" and "second field". For another example, when describing a "level", the prefixes "first" and "second" in "first level" and "second level" do not limit the priorities of the levels. Moreover, an ordinal number used to describe an object does not indicate a quantity of the object, and there may be one or more of such object. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, the terms "in response to", "in response to determining", "in the case of", "when", "while", "if" and "assuming" are interchangeable.

In some embodiments, the terms "greater than", "greater than or equal to", "more than" "more than or equal to", "higher than", "higher than or equal to", "no less than", "no lower than" and "above" are interchangeable. Moreover, the terms "less than", "less than or equal to", "lower than", "lower than or equal to", "smaller than", "smaller than or equal to", "no greater than", "no higher than" and "below" are interchangeable.

In some embodiments, the apparatus may be interpreted as physical or virtual, and its name is not limited to those listed in the embodiments. The terms "apparatus", "equipment", "device", "circuit", "network element", "node", "function", "unit", "section", "system", "network", "chip", "chip system", "entity" and "body" are interchangeable.

In some embodiments, "network" may be interpreted as a device included in the network, such as an access network device and a core network device.

In some embodiments, terms "access network (AN) device", "radio AN (RAN) device", "base station (BS)", "radio BS", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving BS", "carrier", "component carrier" and "bandwidth part (BWP)" are interchangeable.

In some embodiments, terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" and "client" are interchangeable.

In some embodiments, "AN device", "core network device" or "network device" may be replaced by "terminal". For example, the embodiments of the disclosure are applied to a structure in which communications between an AN device, a core network device or a network device and a terminal are replaced by communications between a plurality of terminals (for example, device-to-device (D2D) communications and vehicle-to-everything (V2X) communications). In this case, the terminal may have all or part of the functions of the AN device. In addition, terms such as "uplink" and "downlink" may also be replaced by terms corresponding to communications between terminals, such as "side". For example, "uplink channel" and "downlink channel" may be replaced by "side channel", and "uplink" and "downlink" may be replaced by "side link".

In some embodiments, "terminal" is replaced by "AN device", "core network device" or "network device". In this case, the AN device, the core network device or the network device may have all or part of the functions of the terminal.

In some embodiments, data and information are obtained by means comply with the laws and regulations of the host country.

In some embodiments, data and information are obtained with the consent of users.

In addition, each element, row or column in the tables of the embodiments of the disclosure may be implemented as an independent embodiment, or any combination of elements, rows and columns may be implemented as an independent embodiment.

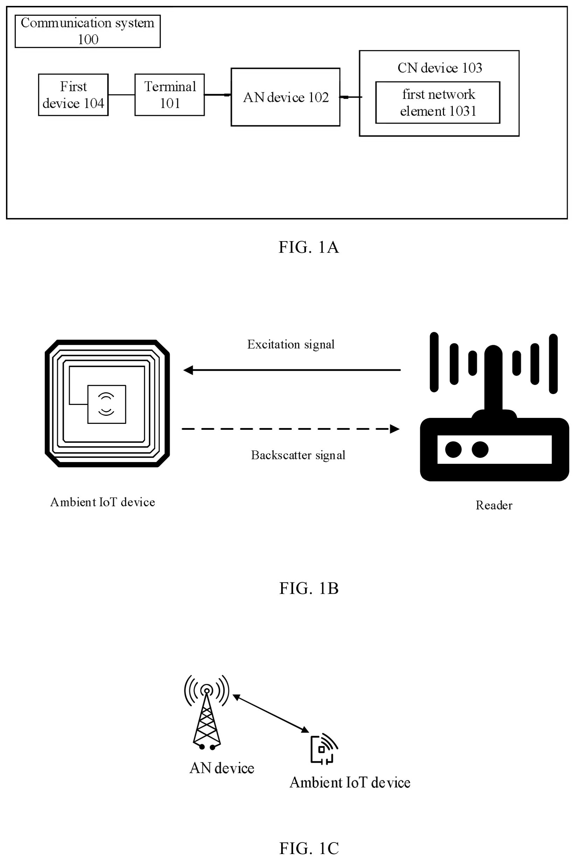

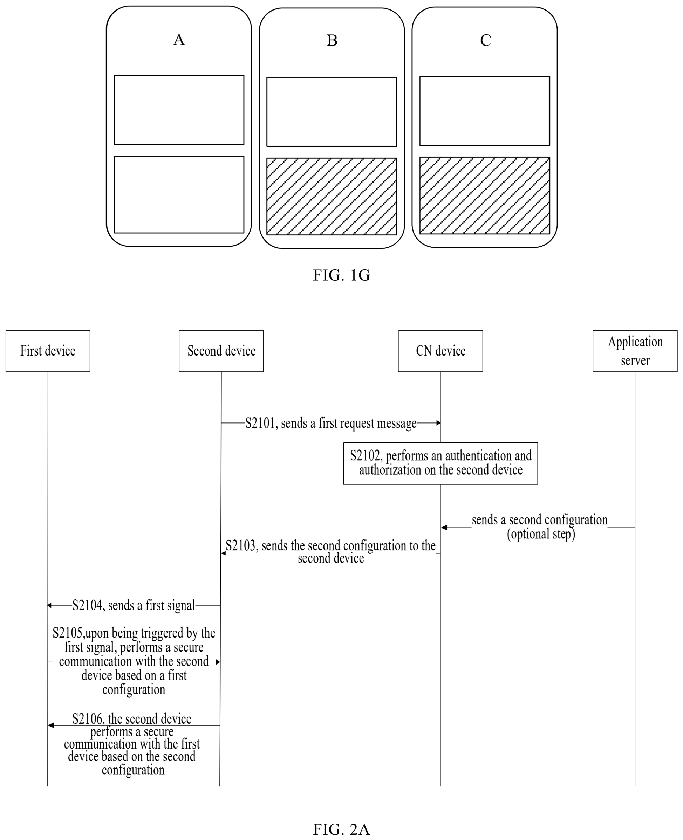

FIG. 1A is a schematic structural diagram of a communication system according to an embodiment of the disclosure.

As illustrated in FIG. 1A, the communication system 100 includes a terminal 101, an AN device 102 and a core network device 103.

In some embodiments, the terminal 101 includes at least one of a mobile phone, a wearable device, an IoT device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited thereto.

In some embodiments, the AN device 102 may be a node or a device that connects the terminal to a wireless network, and it includes at least one of an evolved Node B (eNB) in a 5th generation mobile communication system (5G), a next generation eNB (ng-eNB), a next generation NodeB (gNB), a NodeB (NB), a home NB (HNB), a home eNB (HeNB), a wireless backhaul equipment, a radio network controller (RNC), a BS controller (BSC), a base transceiver station (BTS), a base band unit (BBU), a mobile switching center, a BS in a 6G communication system, an Open RAN, a Cloud RAN, a BS in other communication systems, or an access node in a wireless fidelity (Wi-Fi) system, which is not limited thereto.

In some embodiments, the technical solution of the disclosure is applied to the Open RAN. In this case, interfaces between AN devices or interfaces within an AN device involved in the embodiments of the disclosure may be used as internal interfaces of the Open RAN. The procedures and information interactions between these internal interfaces are implemented by software or programs.

In some embodiments, the AN device is composed of a central unit (CU) and distributed units (DUs), and "CU" may also be the abbreviation of control unit. The use of the CU-DU structure allows to divide a protocol layer of the AN device, such that some functions of the protocol layer are placed in the CU for centralized control, and some or all of the remaining functions of the protocol layer are distributed in the DUs that are centrally controlled by the CU, which is not limited thereto.

In some embodiments, the core network device 103 may be a device including a first network element 1031, or a plurality of devices or groups of devices, each including the first network element 1031. The network element may be virtual or physical. For example, the core network includes at least one of an evolved packet core (EPC), a 5G core network (CN) or a next generation core (NGC).

In some embodiments, the first network element 1031 may be, for example, an access and mobility management function (AMF).

In some embodiments, the first network element 1031 may be, for example, a mobility management entity (MME).

In some embodiments, the first network element 1031 is used for access and mobility management, such as registration management, connection management and mobility management, which is not limited herein.

In some embodiments, the first network element 1031 may be a network element independent of the core network device.

In some embodiments, the core network may further include a second network element, such as user data management (UDM).

It is understandable that to clearly illustrate the technical solution of the embodiments of the disclosure, its applicable communication system is introduced firstly in the embodiments of the disclosure, which does not constitute as a limitation on the technical solution provided by the embodiments of the disclosure. Those skilled in the art understand that as system architectures evolve and new business scenarios emerge, the technical solution provided by the embodiments of the disclosure is also applicable to similar technical problems.

The following embodiments of the disclosure are applied to the entire or a portion of the communication system 100 shown in FIG. 1A, which is not limited herein. The entities shown in FIG. 1A are examples. The communication system may include all or part of the entities in FIG. 1A, and may also include entities not shown in FIG. 1A. The quantities and forms of these entities are arbitrary, and the connection relationships between the entities are illustrated as examples. The entities may or may not be connected, and the entities may be connected by any means, e.g., directly or indirectly, or in a wired manner or wirelessly.

The embodiments of the disclosure may be applied to a long-term evolution (LTE) system, an LTE-Advanced (LTE-A) system, an LTE-Beyond (LTE-B) system, a SUPER 3G system, an IMT-Advanced system, a 4th generation (4G) mobile communication system, a 5G system, a 5G new radio (NR) system, a future radio access (FRA) system, a new-radio access technology (RAT) system, a NR system, a new radio access (NX) system, a future generation radio access (FX) system, a global system for mobile communications (GSM (registered trademark)), a CDMA2000, an ultra mobile broadband (UMB), an IEEE 802.1 1(Wi-Fi (registered trademark)), an IEEE 802.16 (WiMAX (registered trademark)), an IEEE 802.20, an ultra-wideband (UWB), a Bluetooth (registered trademark), a public land mobile network (PLMN), a D2D system, a machine-to-machine (M2M) system, an IoT system, a V2X system, systems using other communication methods or their next generation systems. In addition, the above systems may be combined for applications, such as a combination of the LTE/LTE-A system and 5G.

In some cases, IoT devices are often powered by conventional batteries with limited lifespans, which negatively impacts user experience. The number of IoT network devices will gradually show astronomical growth, and the emergence of a large number of IoT devices will push maintenance expenses, including labor and battery costs, to a whole new level. Billions of conventional batteries are discarded every year, and only a small amount of batteries are effectively recycled, causing harmful impacts on the Earth's ecosystem. Maintaining the operation of IoT networks and replacing batteries can be very challenging under some extreme environmental conditions. In this regard, battery-free IoT communication has been proposed, which can improve network performance and sustainability and expand application scenarios. In addition, battery-free communication is more environmentally friendly and safer for children and the elderly. By removing the conventional battery, device size and cost can be significantly reduced, making it suitable for a variety of new applications.

In some embodiments, various low power wide area (LPWA) technologies, such as machine type communication (MTC), narrow band IoT (NB-IoT) and reduced capability (RedCap), have been developed to meet the growing needs of vertical industries. These LPWA technologies realize low cost, low power consumption and massive connectivity, meeting the requirements of many applications. However, many instances and applications still cannot solve the following problems: (1) inapplicability of battery-powered devices, for example, in extreme environmental conditions (e.g., high pressure environments, environments at extremely high/low temperature and humid environments); (2) a demand for maintenance-free devices (e.g., devices that do not need to replace conventional batteries); and (3) a demand for ultra-low complexity, very small device size/shape factor (e.g., thickness in mm), or longer lifespans.

The IoT supporting environmental power is a promising technology that can address the above unmet needs. IoT devices that support environmental power are IoT devices powered by energy harvesting, which is battery-free or has limited energy storage capacities (e.g., using capacitors). It harvests energies of radio waves, light, motion, heat or any other suitable source of energy.

Energy harvested from environments can drive data transmission and wireless communication of sensing nodes. The existing mainstream low-power IoT communication chips (such as BLE, LoRa, NB-IoT) have a power consumption of tens of milliwatts or even hundreds of milliwatts for transmission and reception, while the energy harvested from environments is only at the microwatt level, which is insufficient to drive these types of nodes to work. Therefore, new wireless communication technologies are needed to reduce the communication power consumption to tens of microwatts or even below ten microwatts. Currently, backscatter communication technology is the main method. Backscatter communications is one of the key technologies for building a green, energy-efficient, low-cost, and flexibly deployable future IoT, and is an important means to realize "intelligent interconnection of everything". Therefore, backscatter communications is a possible approach.

As illustrated in FIG. 1B, backscatter transmission can utilize the principle of backscatter of radio frequency (RF) signals to design an extremely low-power modulation and transmission technology. A reader sends physical layer signals to an ambient IoT device. The physical layer signal may be various alternating current signals such as pulse signals. In some embodiments, the physical layer signal is used to provide energy for the ambient IoT device to transmit signals, and thus the physical layer signal may be referred to as an excitation signal or a trigger signal. For example, since a portion of the excitation signal will be reflected when it reaches the ambient IoT device, the ambient IoT device can adjust a receiving antenna and an impedance accordingly according to information to be sent, so as to enhance the reflection of the incident excitation signal, and modulate sensing data it acquires onto the reflected signal to complete data transmission. This process is similar to a reflector. Compared to other communication technologies, backscatter transmission does not require a complex RF structure, and thus it reduces the use of devices such as power amplifiers, high-precision crystal oscillators, duplexers, and high-precision filters. It also does not require complex baseband processing. Therefore, it can simplify the design of the ambient IoT device, which significantly reduces the cost of nodes in the ambient IoT device. The ambient IoT device is an IoT device that operates based on environmental energy. The environmental energy may include signal energy of the above mentioned wireless signal, and may also include other environmental energy sources such as geothermal energy and/or solar energy.

The device that sends the physical layer signal to the ambient IoT device and triggers the ambient IoT device to return the reflected signal may be referred to as an anchor point of the reader of the ambient IoT device.

It is noted that the ambient IoT device is a type of device that uses the backscatter transmission mechanism for wireless communication. In specific implementations, other devices can also use the backscatter transmission mechanism for wireless communication.

The anchor point or the reader of the ambient IoT device may be a network node of a wireless communication network, such as an AN device, a relay node (or an intermediate node) and a terminal.

The network topology architecture of backscatter transmission includes one of the following architectures.

Topology architecture 1. As illustrated in FIG. 1C, uplink (UL) or downlink (DL) data transmission is carried out directly between the ambient IoT device and the AN device.

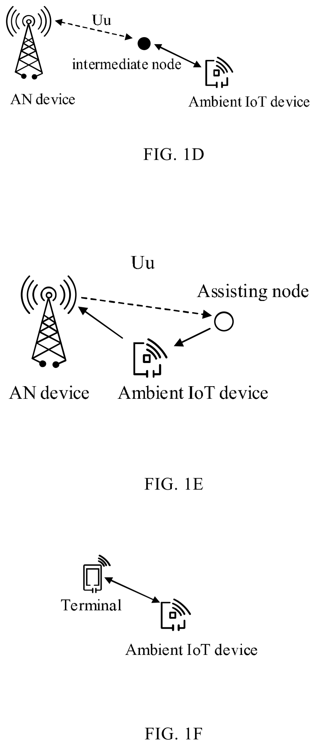

Topology architecture 2. As illustrated in FIG. 1D, DL or UL data transmission is carried out indirectly between the ambient IoT device and the AN device, and there is an intermediate node (or assisting node) configured between them for forwarding. For example, the intermediate node may be a relay, an integrated access backhaul (IAB) node, a UE or a repeater (RP).

Topology architecture 3. As illustrated in FIG. 1E, DL or UL data transmission or reception is carried out directly between the ambient IoT device and the AN device, and there is an assisting node on the UL or DL, which is responsible for receiving or sending data on the UL or receiving data on the DL. For example, the assisting node may be a relay, an IAB node, a terminal, and a network controlled repeater (NCR).

Topology architecture 4. As illustrated in FIG. 1F, DL or UL data transmission or reception is carried out directly between the ambient IoT device and the UE. The UE is responsible for collecting data and forwarding the collected data to the network side.

As illustrated in FIG. 1G, there are three types of devices that use the backscatter transmission mechanism for wireless communication.

Device A. It has no energy storage capabilities and cannot generate signals/amplified signals independently, and can only carry out backscatter transmission.

Device B. It has energy storage capabilities and cannot generate signals independently, and can only carry out backscatter transmission. Its stored energy may be used to amplify backscatter signals.

Device C. It has energy storage capabilities and can generate signals independently. That is, it has active RF components for transmission.

FIG. 2A is an interactive schematic diagram of a communication method illustrated according to an embodiment of the disclosure. As illustrated in FIG. 2A, an embodiment of the disclosure involves a communication method. The method is applied to the communication system 100, and includes the following steps.

At step S2101, a second device sends a first request message.

The second device may be any device that can access a mobile communication network, such as a terminal, an AN device, a relay node and an assisting node.

In some embodiments, the second device may be a communication device provided with a battery or connected to electric supply.

In some embodiments, the first request message is used for requesting a second configuration.

In some embodiments, the second device may be a terminal, or a relay node or an assisting node set up by a communication operator, and the first request message may be a network registration request message or an attached message

In some embodiments, the first request message includes at least one of:
equipment information of the second device;
a request symbol of the second configuration; or
equipment information of the first device the second device relays.

In some embodiments, the equipment information of the second device includes:
identification information of the second device, which is used to identify the second device; and
type information of the second device, which indicates a type of the second device. The type of the second device may include an AN device, a terminal, a relay device and/or an assisting device.

Type information of the first device may indicate any device shown in FIG. 1G.

The equipment information of the first device includes at least one of:
type information, indicating a type of the first device;
identification information, indicating the first device; or
service information, indicating a service involved by the first device.

The service information of the first device may indicate the second device the service information to be relayed for the first device via backscatter communication with the first device.

Certainly, only some examples of the first request message are shown above, and the specific implementations are not limited to the above examples.

In some embodiments, the second device sends the first request message to a first CN device.

In some embodiments, the first CN device receives the first request message.

At step S2102, the first CN device performs authentication and authorization on the second device.

In some embodiments, the first CN device may be a CN function for security authentication or a CN function for policy and/or security parameter management.

In some embodiments, the first CN device performs the authentication and authorization on the second device based on a local configuration.

In some embodiments, the first CN device performs the authentication and authorization on the second device based on a configuration provided by an operation administration and maintenance (OAM) device.

In some embodiments, the first CN device performs the authentication and authorization on the second device based on contract data of the second device.

In some embodiments, the first CN device performs the authentication and authorization on the second device based on the contract data of the second device through data interactions with a second CN device.

In some embodiments, S2102 includes, but is not limited to, at least one of:
the first CN device sending a second request message to the second CN device or an application server.

In some embodiments, the second request message is used to request the second CN device or the application server to perform the authentication and authorization on the second device.

In some embodiments, the second request message may include a device identifier of the second device, and/or a device identifier of the first device triggered by the second device and/or a related service code.

The second CN device or the application server sends a second response message to the first CN device,
correspondingly, the first CN device receives the second response message.

In some embodiments, the second response message may include a success message and/or a failure message.

In some embodiments, the success message may indicate that the second device passes the authentication and authorization.

In other embodiments, the failure message may indicate that the authentication and authorization of the second device has failed, which is understood as the second device fails to pass the authentication and authorization.

Therefore, the first CN device may determine whether the second device passes the authentication and authorization based on the second response message.

In some embodiments, the authentication and authorization on the second device is performed by the application server. In this case, if the second response message carries the second configuration, it is considered that the second device passes the authentication and authorization. If the second response message does not carry the second configuration, it is considered that the second device fails to pass the authentication and authorization.

In some embodiments, the second CN device may be a CN device that stores the contract data of the second device. For example, the second CN device may include, but is not limited to, UDM and/or unified data repository (UDR).

In other embodiments, the first CN device may perform local authentication and authorization on the second device based on the local configuration and/or the configuration provided by the OAM device.

At step S2103, the second configuration is sent to the second device.

In some embodiments, upon the second device passing the authentication and authorization, the first CN device sends the second configuration to the second device.

In some embodiments, if the second device is an AN device, an OAM device, a relay device or an assisting device designated by the communication operator, the step of authentication and authorization may be skipped, and the second configuration may be directly sent to the second device based on the first request message.

In some embodiments, the first CN device sends the second configuration that is stored locally to the second device.

In some embodiments, the first CN device requests the second configuration from the second CN device, receives the second configuration returned by the second CN device, and sends the second configuration returned by the second CN device to the second device.

In some embodiments, upon the second device passing the authentication and authorization, the first CN device requests the second configuration from the application server, and receives the second configuration returned by the application server.

In some embodiments, upon the second device passing the authentication and authorization, a third request message is sent to the application server.

In some embodiments, the third request message is used to request the second configuration.

In some embodiments, the third request message may include the device identifier of the second device and/or the device identifier of the first device.

In some embodiments, the application server sends a third response message to the first CN device.

In some embodiments, the third response message may include the second configuration.

In some embodiments, the second configuration may include, but is not limited to, at least one of:
second security information;
equipment information of the first device;
service information related to the first device; or
device type information of the first device.

In some embodiments, the second security information at least includes a third key.

In some embodiments, the second security information may include a long-term credential.

In some embodiments, different types of first devices correspond to different second configurations.

In some embodiments, the first devices involving in different services correspond to different second configurations.

In some embodiments, the second security information may also include a second security context.

In some embodiments, the second security context may indicate at least one of:
algorithm information of a security algorithm, including an algorithm identifier and/or an algorithm type. The algorithm type includes, but is not limited to, an integrity encryption algorithm, a confidentiality encryption algorithm and/or a scrambling algorithm;
a security parameter, used to generate a fourth key based on the third key. The security parameter includes, but is not limited to, an algorithm identifier and/or an algorithm length; or
a service code of a service corresponding to the second security information.

In some embodiments, the service code and/or a length of the service code may be used as the security parameter used for generating the fourth key.

At step S2104, the second device sends a first signal.

In some embodiments, the first signal may be an excitation signal for the first device, which triggers the first device to send designated information. That is, the first device may perform backscatter transmission of other signals by using the energy of the first signal.

Excitation here may be understood as trigger. The first signal may be a trigger signal of the first device.

In some embodiments, the first signal may be a signal that provides a wireless transmission energy to the first device.

In some embodiments, the first signal may be a signal that does not carry any information, such as a pulse signal.

In some embodiments, the second device may broadcast, multicast or unicast the first signal.

In some embodiments, assuming that the second device is an AN device and/or a relay device or an assisting node at a fixed position, it may periodically or non-periodically broadcast, multicast or unicast the first signal.

In other embodiments, the first signal carries information. For example, the first signal may carry designated information.

In some embodiments, the designated information includes, but is not limited to, at least one of:
a task identifier that identify a task to be executed in the wireless communication between the first device and the second device; or
task information that describes a task to be executed.

In some embodiments, the task information may also include:
area information of the task to be executed, which includes, but is not limited to, a cell identifier, a BS identifier and/or a tracking area (TA) identifier.

In other embodiments, the task information may also include:
equipment information of the first device that executes the task to be executed corresponding to the task identifier. For example, the equipment information may indicate the type of the device or functions the device supports;
configuration information, which may indicate the second device to perform wireless transmission of the first signal and a configuration for wireless communication with the first device. For example, the configuration information may involve in a configuration of wireless resources, a power configuration and/or a transmission mode configuration; and
delay sensitive information, indicating whether it is delay sensitive to the designated information sent by the first device. If the designated information is delay-sensitive information, the first terminal and/or the network device need to send it to the second device in time after receiving the designated information of the first device. If the designated information is not delay-sensitive information, the first terminal and/or the network device may temporarily cache the designated information and send the designated information to the second device at an appropriate transmission occasion.

The transmission mode configuration may indicate repeated transmission or non-repeated transmission.

Only some examples of the designated information carried by the first signal are shown above, and the specific implementations are not limited to the above examples.

In some embodiments, the first device receives the first signal.

At step S2105, the first device, upon being triggered by the first signal, performs a secure communication with the second device based on a first configuration.

In some embodiments, the first configuration may be a configuration pre-configured in the first device.

In some embodiments, the first configuration includes, but is not limited to, first security information.

In some embodiments, the first security information may be a long-term credential.

In some embodiments, the first security information may include a first key.

There are many types of first keys. The first key includes at least one of:
an integrity key for integrity protection;
a confidentiality key for confidentiality protection;
a scrambling key for scrambling protection; or
a password for encoding protection.

The encoding protection includes, but is not limited to: inputting the password into a specified position of information, and a receiver reading the password from the specified position to match, and if the matching is successful, determining that security authentication is passed.

In some embodiments, the first security information may include a first security context.

In some embodiments, the first security context may indicate at least one of:
algorithm information of a security algorithm, including an algorithm identifier and/or an algorithm type. The algorithm type includes, but is not limited to, an integrity encryption algorithm, a confidentiality encryption algorithm and/or a scrambling algorithm;
a security parameter, used to generate a third key based on the first key. The security parameter includes, but is not limited to, an algorithm identifier and/or an algorithm length; or
a service code of a service corresponding to the first security information.

In some embodiments, the service code and/or a length of the service code may be used as the security parameter used for generating the third key.

At step S2106, the second device performs a secure communication with the first device based on second configuration.

In some embodiments, the secure communication includes, but is not limited to, at least one of:
confidentiality protection for the wireless transmission between the first device and the second device;
scrambling and descrambling protection for the wireless transmission between the first device and the second device;
integrity protection for the wireless communication between the first device and the second device; or
encoding protection for the wireless communication between the first device and the second device.

In some embodiments, the secure communication between the first device and the second device includes, but is not limited to, at least one of:
confidentiality protection, scrambling and descrambling protection, encoding protection and/or integrity protection for the wireless transmission from the first device to the second device; or
confidentiality protection, scrambling and descrambling protection, encoding protection and/or integrity protection for wireless transmission from the second device to the second first.

The encoding protection may be that the second device encodes a signal sent to the first device based on a password corresponding to the first device. The password is used for the first device to perform security authentication on the second device.

Decoding authentication may be that the second device decodes information received from the first device and determines whether the decoded information contains the password corresponding to the first device. If the decoded information contains the password, it is considered that the first device has passed the security authentication.

For example, the encoding protection may be that the second device uses a password corresponding to the first key to determine whether the information received from the first device contains the password, and if a message received from the first device contains the password, it is considered that the first device has passed the security authentication; and/or the second device carries the password in a signal sent to the first device, and the password is used for the first device to perform the security authentication on the second device.

The technical solution provided by the embodiments of the disclosure realize secure protection between the first device and the second device.

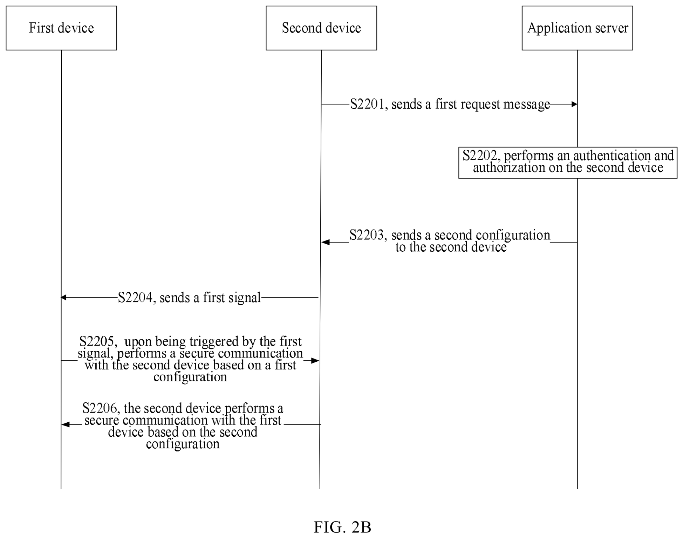

FIG. 2B is an interactive schematic diagram of a communication method illustrated according to an embodiment of the disclosure. As illustrated in FIG. 2B, an embodiment of the disclosure involves a communication method. The method is applied to the communication system 100, and includes the following steps.

At step S2201, a second device sends a first request message.

Step S2201 may refer to step S2101 shown in FIG. 2A.

At step S2202, an application server performs an authentication and authorization on the second device.

In some embodiments, the application server may be located within a CN.

In some embodiments, the application server may be located outside the CN.

The application server performs the authentication and authorization on the second device based on a device identifier of the second device.

For example, the authentication and authorization is performed based on a short message and/or contract data.

For another example, the application server performs the authentication and authorization on an application layer based on an application installed on the second device.

In some embodiments, the application server performs the authentication and authorization on the second device based on the device identifier of the second device and a device identifier of the first device.

At step S2203, the application server sends a second configuration to the second device.

In some embodiments, upon the second device passing the authentication and authorization, the application server sends the second configuration to the second device.

At step S2204, the second device sends a first signal.

Detailed description of step S2204 may refer to step S2104 shown in FIG. 2A.

At step S2205, upon being triggered by the first signal, the first device performs a secure communication with the second device based on a first configuration.

At step S2206, the second device performs a secure communication with the first device based on the second configuration.

Detailed descriptions of steps S2205 and S2206 may refer to steps S2105 and S2106 shown in FIG. 2A.

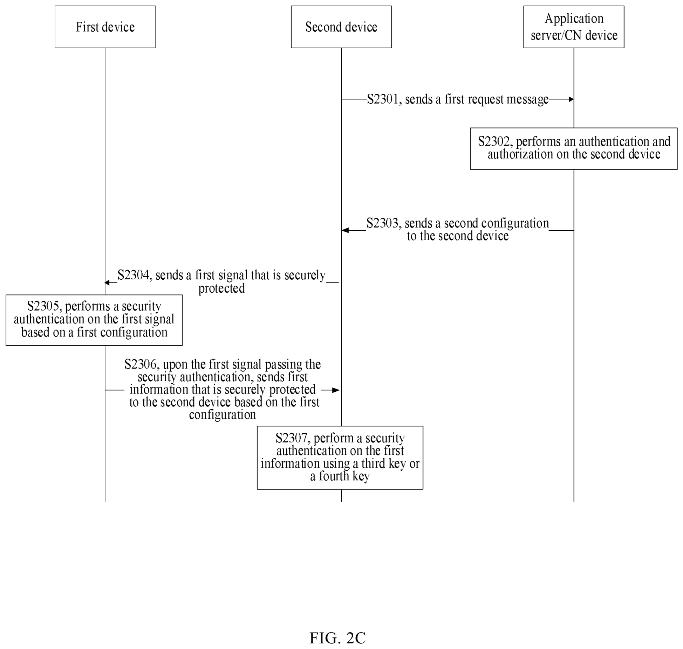

FIG. 2C is an interactive schematic diagram of a communication method illustrated according to an embodiment of the disclosure. As illustrated in FIG. 2C, an embodiment of the disclosure involves a communication method. The method is applied to the communication system 100, and includes the following steps.

At step S2301, a second device sends a first request message.

Step S2301 may refer to step S2101 shown in FIG. 2A.

At step S2302, an application server or a first CN device performs an authentication and authorization on the second device.

Related descriptions of the authentication and authorization of the second device by the application server in step S2302 may refer to step 2202 shown in FIG. 2B.

Related descriptions of the authentication and authorization of the second device by the first CN device in step S2302 may refer to step 2102 shown in FIG. 2A.

At step S2303, the application server or the first CN device sends a second configuration to the second device.

Related description of step S2303 may refer to step S2103 in FIG. 2A or step S2203 in FIG. 2B.

At step S2204, the second device sends a first signal.

In some embodiments, the first signal is securely protected. For example, the first signal is encrypted, scrambled, encoded or integrity protected.

In some embodiments, related description on whether the first signal carries designated information may refer to the corresponding part in the embodiment shown in FIG. 2A.

At step S2205, a security authentication is performed on the first signal based on a first configuration.

In some embodiments, a first key is used to perform the security authentication, such as decryption, descrambling, encoding and/or integrity verification, on the first signal.

In some embodiments, a second key generated based on the first key is used to perform the security authentication, such as decryption, descrambling, decoding and/or integrity verification, on the first signal.

At step S2206, upon the first signal passing the security authentication, first information securely-protected is sent to the second device based on the first configuration.

For example, the first signal is decrypted using the first key or the second key. If the decryption is successful, the first signal passes the security authentication.

For another example, the first signal is descrambled using the first key or the second key. If the descrambling is successful, the first signal passes the security authentication.

As another example, a first password is used to decode and authenticate the first signal. If the authentication is successful, the first signal passes the security authentication.

For yet another example, the integrity of the first signal is verified using the first key or the second key. If the verification is successful, the first signal passes the security authentication.

If the security authentication of the first signal has failed, it refuses to send the first information to the second device.

If the first signal passes the security authentication, it indicates that the second device passes the security authentication.

In some embodiments, the first information may include data and/or signaling. For example, the first information may include pre-configured data of the first device and data and/or signaling of the first device written by a third device. For example, the third device may be various sensors. The pre-configured data may be any data written into the first device prior to its operation.

The first information may be carried by the reflected signal shown in FIG. 1B.

For example, the pre-configured data of the first device includes, but is not limited to, one of the following:
a device identifier of the first device;
device type information of the first device; and
an identifier and/or information of a target carrying the first device. For example, the target carrying the first device may include objects such as express delivery. The pre-configured data of the first device may be the identifier of the target and/or type information of the express delivery, or a sending place of the express delivery, a destination of the express delivery and/or security information of the express delivery.

In some embodiments, although the first device does not have a power supply itself, or only has a power supply module that temporarily stores energy or a power supply module with limited power supply capacity, the first device has a storage space, and as a storage device external to the third device, the first device may be written with data and/or signaling by the third device. In this way, even if the first device does not have pre-configured data, the first information in the first device is updated dynamically.

The first information may be securely protected by, but not limited to, at least one of the following:
encrypting the first information using the first key or the third key;
scrambling the first information using the first key or the third key; or
inserting the first key in the first information as a password.

When the first key or the third key is used for integrity protection of the first information, a message integrity code (MIC) is obtained and carried in the first information and returned to the second device. In some embodiments, the MIC may be replaced by a digital signature.

In other embodiments, upon the first signal being authenticated, the first information that is not securely protected is sent to the second device. Considering the first device is simple and has limited energy storage, it is assumed that the second device is safe. Therefore, it is relatively safe to send the first information to the second device. Thus, the first information, which is not securely protected, may also be sent directly to the second device.

At step S2307, the second device performs a security authentication on the first information using a third key or a fourth key.

In some embodiments, the third key includes at least one of:
an integrity key for integrity protection;
a confidentiality key for confidentiality protection;
a scrambling key, used for scrambling protection; or
a password, for encoding protection.

S2307 may specifically include at least one of the following:
decrypting the first information using the third key or the fourth key, and if the first information is decrypted successfully, it means that the first information has passed the security authentication, that is, the first device has passed the security authentication;
descrambling the first information by using the third key or the fourth key, and if the first information is successfully descrambled, it means that the first information has passed the security authentication; or
verifying integrity of the first information by using the third key or the fourth key, if the integrity verification of the first information is successful, it means that the first information has passed the security authentication. The integrity verification here may include digital signature authentication and/or MIC authentication.

If the security authentication of the first information is successfully, the second device will send the first information to a target device. The target device may include, but is not limited to, a CN device and/or an application server.

If the third key is used as a password, the password is matched with the first information. When it is determined that the first information includes a password, it is considered that the first information have passed the security authentication. And/or the password is carried when sending a signal to the first device, so as to facilitate the first device to perform the security authentication. In this way, encoding protection in security protection is realized.

In this case, two-way security authentication between the first device and the second device is realized through the first signal and the first information, which ensures that UL and/or DL communications of the first device are securely protected.

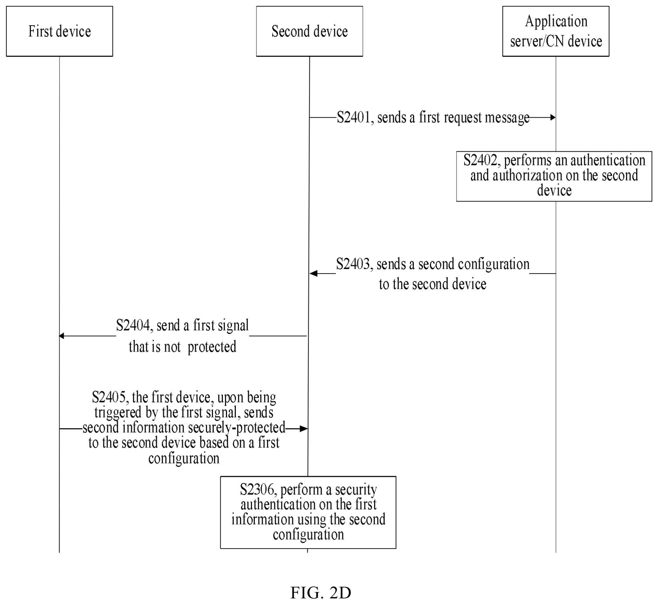

FIG. 2D is an interactive schematic diagram of a communication method illustrated according to an embodiment of the disclosure. As illustrated in FIG. 2D, an embodiment of the disclosure involves a communication method. The method is applied to the communication system 100, and includes the following steps.

At step S2401, a second device sends a first request message.

The step S2401 may refer to step S2101 shown in FIG. 2A.

At step S2402, an application server or a first CN device performs authentication and authorization on the second device.

The description of the process in which the application server performs the authentication and authorization on the second device in step S2402 may refer to step 2202 shown in FIG. 2B.

The description of the process in which the first CN device performs the authentication and authorization on the second device in step S2402 may refer to step 2102 shown in FIG. 2A.

At step S2403, the first CN device or the application server sends a second configuration to the second device.

The related description of step S2303 may refer to step S2103 shown in FIG. 2A or step S2203 shown in FIG. 2B.

At step S2404, the second device sends a first signal.

In some embodiments, the first signal is not securely protected. For example, the first signal is not encrypted, scrambled, encoded or integrity protected.

In some embodiments, the related description on whether the first signal carries designated information may refer to the corresponding part of the embodiment of FIG. 2A.

At step S2405, upon being triggered by the first signal, the first device sends second information securely-protected to the second device based on a first configuration.

In some embodiments, the second information is used for a security authentication between the second device and the first device.

In some embodiments, the content of the second information may be identical to the content of the first information of the embodiment shown in FIG. 2C.

In other embodiments, because the first signal is not securely protected, it is equivalent to that the first device has not performed the security authentication on the second device. In this case, the second information may not carry actual service data and/or a control signaling, but indicate the confidence in performing security authentication on the second device.

In some embodiments, the first key or the second key is used to encrypt, scramble, encode and/or verify the integrity of the second information.

At step S2406, the second device performs a security authentication on the first information using the second configuration.

In some embodiments, the second device performs the security authentication, such as decryption, descrambling and/or integrity verification, on the second information using a third key or a fourth key.

In some embodiments, if the first information passes the security authentication, that is, the first device passes the security authentication, the second device may obtain information to be sent to a target device through one or more subsequent rounds of communications with the first device.

In other embodiments, if the security authentication of the first information has failed, communications between the first device and the second device will be stopped.

In yet other embodiments, if the security authentication of the first information has failed, a new round of security authentication with the first device will be initiated or communications with the first device will be abandoned.

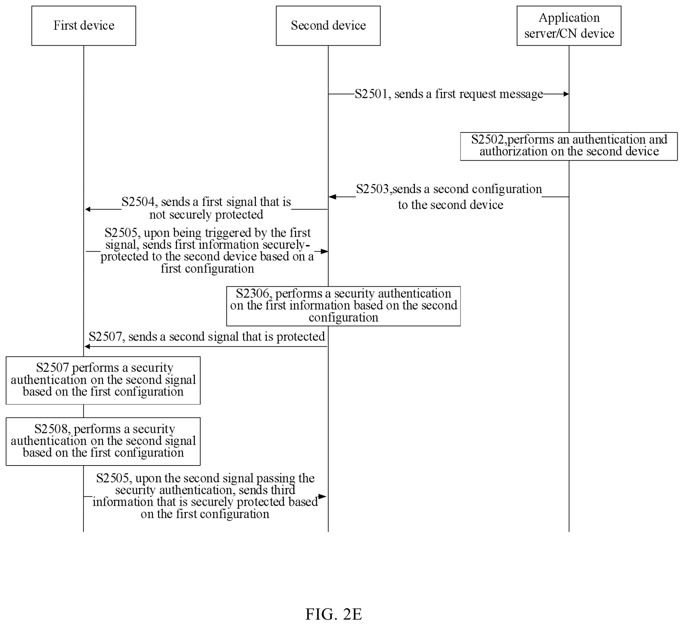

FIG. 2E is an interactive schematic diagram of a communication method illustrated according to an embodiment of the disclosure. As illustrated in FIG. 2E, an embodiment of the disclosure involves a communication method. The method is applied to the communication system 100, and includes the following steps.

At step S2501, a second device sends a first request message.

The step S2501 may refer to step S2101 shown in FIG. 2A.

At step S2502, an application server or a first CN device performs an authentication and authorization on the second device.

The description of the process in which the application server performs the authentication and authorization on the second device in step S2502 may refer to step 2202 shown in FIG. 2B.

The description of the process in which the first CN device performs the authentication and authorization on the second device in step S2502 may refer to step 2102 shown in FIG. 2A.

At step S2503, the first CN device or the application server sends a second configuration to the second device.

The related description of step S2503 may refer to step S2103 shown in FIG. 2A or step S2203 shown in FIG. 2B.

At step S2504, the second device sends a first signal.

In some embodiments, the first signal is not securely protected. For example, the first signal is not encrypted, scrambled, encoded or integrity protected.

In some embodiments, the related description on whether the first signal carries designated information may refer to the corresponding part of the embodiment of FIG. 2A.

At step S2505, upon being triggered by the first signal, the first device sends second information securely-protected to the second device based on a first configuration.

In some embodiments, the second information is used for the security authentication between the second device and the first device.

In some embodiments, the content of the second information may be identical to the content of the first information of the embodiment shown in FIG. 2C.

In other embodiments, because the first signal is not securely protected, it is equivalent to that the first device has not performed the security authentication on the second device. In this case, the second information may not carry actual service data and/or a control signaling, but indicate confidence in performing security authentication on the second device.

In some embodiments, the first key or the second key is used to encrypt, scramble, encode and/or verify the integrity of the second information.

At step S2506, the second device performs a security authentication on the second information based on first configuration.

At step S2507, the second device sends a second signal.

In some embodiments, upon the second information passing the security authentication, the second device sends the second signal.

In some embodiments, the second signal is securely protected.

At step S2508, security authentication is performed on the second signal based on the first configuration.

In other embodiments, if the second signal is not securely protected, the first device does not need to perform the security authentication on the second signal based on the first configuration.

It is worth noting that the security authentication of the second signal may refer to the security authentication of the first signal based on the first configuration shown in FIG. 2C.

At step S2609, upon the second signal passing the security authentication, third information securely-protected is sent based on the first configuration.

The third information may be identical to or differ from the first information shown in FIG. 2C.

If the second signal fails the security authentication, it will stop sending the third information to the second device.

Steps related to the security protection for the third information based on the first configuration may refer to the secure protection for the first information based on the first configuration.

In some embodiments, the method further includes:
the second device performing security authentication on the third information using the second configuration.

The way of performing the security authentication on the third information using the second configuration may refer to the security authentication on the third information using the second configuration shown in FIG. 2C.

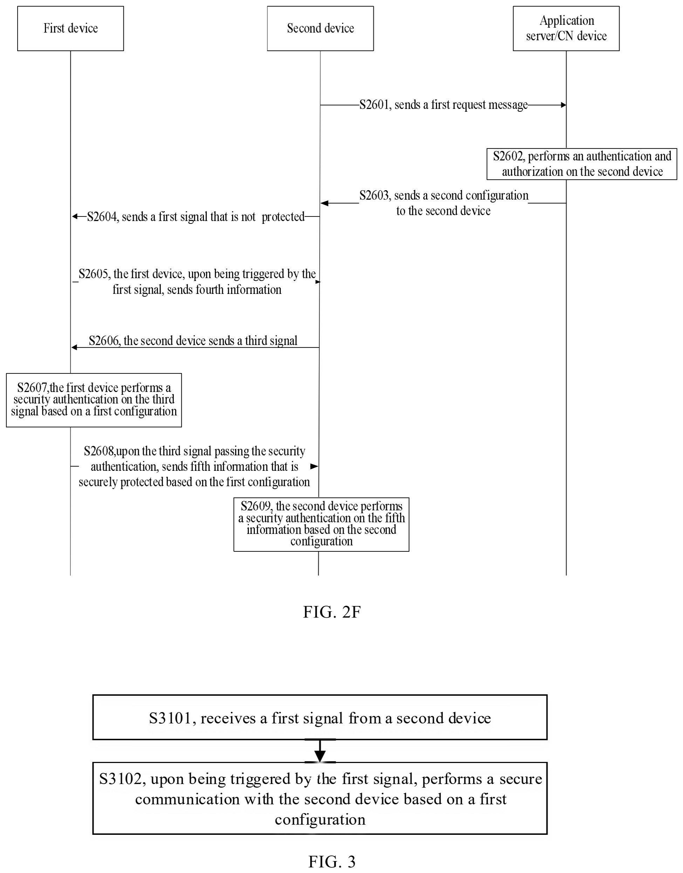

FIG. 2F is an interactive schematic diagram of a communication method illustrated according to an embodiment of the disclosure. As illustrated in FIG. 2F, an embodiment of the disclosure involves a communication method. The method is applied to the communication system 100, and includes the following steps.

At step S2601, a second device sends a first request message.

The step S2601 may refer to step S2101 shown in FIG. 2A.

At step S2602, an application server or a first CN device performs an authentication and authorization on the second device.

The relevant description of the process in which the application server performs the authentication and authorization on the second device in step S2602 may refer to step 2202 shown in FIG. 2B.

The relevant description of the process in which the first CN device performs the authentication and authorization on the second device in step S2602 may refer to step 2102 shown in FIG. 2A.

At step S2603, the first CN device or the application server sends a second configuration to the second device.

The related description of step S2603 may refer to step S2103 shown in FIG. 2A or step S2203 shown in FIG. 2B.

At step S2604, the second device sends a first signal.

In some embodiments, the first signal is not securely protected. For example, the first signal is not encrypted, scrambled, encoded or integrity protected.

In some embodiments, the related description on whether the first signal carries designated information may refer to the corresponding part of the embodiment of FIG. 2A.

At step S2605, upon being triggered by the first signal, a first device sends fourth information.

In some embodiments, the fourth information is used to request the security authentication between the first device and the second device.

At step S2606, the second device sends a third signal.

In some embodiments, the third signal is securely protected.

In some embodiments, the related description of the third signal is similar to that of the first signal.

At step S2607, the first device performs a security authentication on the third signal based on a first configuration.

The security authentication of the third signal based on the first configuration may refer to the security authentication on the first signal based on the first configuration.

At step S2608, upon the third signal passing the security authentication, sends fifth information securely-protected based on the first configuration to the second device.

The content of the fifth information may be the same as or similar to that of the first information.

The security protection of the fifth information may be the same as the security protection of the first information mentioned above.

At step S2609, the second device performs a security authentication on the fifth information based on the second configuration.

As illustrated in FIG. 3, an embodiment of the disclosure provides a communication method. The method is performed by a first device, and includes the following steps.

At step S3101, a first signal sent by a second device is received.

In some embodiments, the first device receives the first signal from the second device.

The relevant description of the first signal may refer to the relevant description of step S2101 shown in FIG. 2A.

The first device may be any wireless communication device based on backscatter transmission.

At step S3102, upon being triggered by the first signal, the first device performs a secure communication with the second device based on a first configuration.

"Upon being triggered by the first signal, the first device performs a secure communication with the second device based on a first configuration" may refer to the corresponding description of the embodiment of FIG. 2A.

Step S3102 may involve many options, and the following options are provided.

### Option 1

Step S3102 may include:
if the first signal is securely protected, the first device performs a security authentication on the first signal based on the first configuration; or
upon the first signal passing the security authentication, the first device sends first information to the second device. The first information may be securely protected by the first device based on the first configuration, or the first information is not securely protected.

In some embodiments, if energy acquired based on the first signal is less than a specified threshold, or currently available energy of the first device is less than a specified threshold, the first device sends the first information that is not securely protected to the second device.

In some embodiments, the first information is securely protected, and thus two-way security authentication between the first device and the second device is realized.

In some embodiments, if the first signal fails the security authentication, the first device will stop sending information to the second device.

The relevant description of Option 1 may refer to the embodiment of FIG. 2C.

### Option 2

Step S3102 may include:
When triggered by a first signal that is not securely protected, the first device sends second information securely-protected to the second device based on the first configuration.

In some embodiments, the second information is at least used for the security authentication between the first device and the second device.

If the second information is securely protected, it may prevent the second information from leaking and/or being tampered with during wireless transmission.

The relevant description of Option 2 may refer to the embodiment of FIG. 2D.

### Option 3

Step S3102 may include:
When triggered by a first signal that is not securely protected, the first device sends second information securely-protected to the second device based on the first configuration.

A second signal is received.

In some embodiments, the second signal of the second device received by the first device is securely protected.

The security authentication on the second signal is performed based on the first configuration.

Upon the second signal passing the security authentication, third information that is securely protected is sent based on the first configuration.

The relevant description of Option 3 may refer to the embodiment of FIG. 2D.

In some embodiments, if the second signal fails the security authentication, the second device will stop sending information to the first device.

### Option 4

Step S3102 may include:
When triggered by a first signal that is not securely protected, the first device sends second information securely-protected to the second device based on the first configuration.

In some embodiments, the second information is used for the security authentication between the second device and the first device.

A second signal is received.

In some embodiments, the second signal is securely protected.

The security authentication is performed on the second signal based on the first configuration.

In other embodiments, if the second signal is not securely protected, the first device does not need to perform the security authentication on the second signal based on the first configuration.

Upon the second signal passing the security authentication, the third information that is securely protected is sent based on the first configuration.

The relevant description of Option 4 can refer to the embodiment of FIG. 2E.

### Option 5

Step S3102 may include:
if the first signal is not securely protected, sending fourth information under the excitation of the first signal.

In some embodiments, the fourth information is used to request the security authentication.

A third signal sent by the second device is received.

In some embodiments, the third signal is securely protected.

The security authentication is performed on the third signal based on the first configuration.

Upon the third signal passing the security authentication, fifth information that is securely protected is sent to the second device based on the first configuration.

In some embodiments, if the third signal fails the security authentication, the first device will stop sending information to the second device.

The relevant description of Option 5 may refer to the embodiment of FIG. 2F.

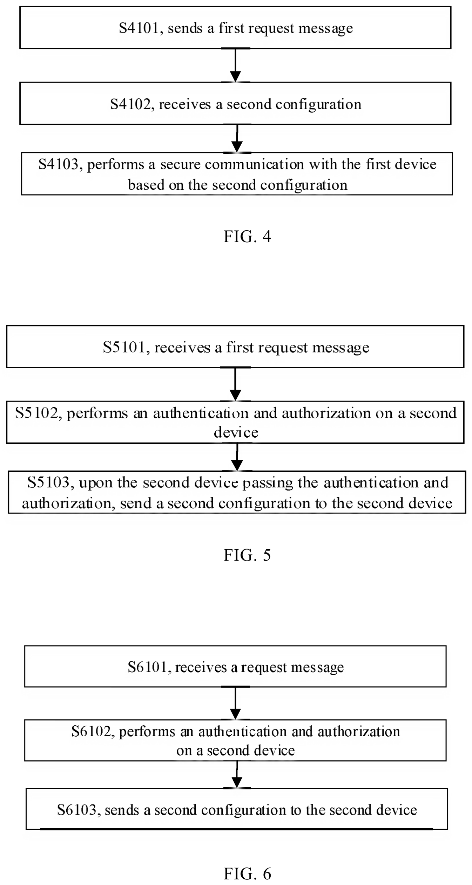

As illustrated in FIG. 4, an embodiment of the disclosure provides a communication method. The method is performed by a second device, and includes the following steps.

At step S4101, a first request message is sent.

In some embodiments, the first request message is used for requesting a second configuration.

In some embodiments, the first request message is sent to a first CN device.

In some embodiments, the first request message is sent to an application server.

In some embodiments, the relevant description of the first request message can refer to the relevant description of the embodiment of FIG. 2A.

At step S4102, a second configuration is received.

In some embodiments, the second device receives the second configuration sent by the first CN device.

In other embodiments, the second device receives the second configuration sent by the application server.

In some embodiments, the second configuration is used for a secure communication between a first device and the second device.

In some embodiments, the detailed description of the second configuration may refer to the relevant description of the embodiment of FIG. 2A, which will not be repeated here.

In some embodiments, the second configuration is received from the application server.

In other embodiments, the second configuration is received from the CN device.

In some embodiments, the second configuration is carried by a first response message.

For example, if the second device passes authentication and authorization, the first response message carries the second configuration.

For another example, if the second device fails the authentication and authorization, the first response message does not carry the second configuration.

In some embodiments, if the second device passes the authentication and authorization, the first response message is a success message.

In other embodiments, if the second device fails the authentication and authorization, the first response message is a failure message.

At step S4103, a secure communication with the first device is performed based on the second configuration.

In some embodiments, step S4103 at least includes: sending a first signal.

In some embodiments, the second device broadcasts, multicasts or unicasts the first signal.

In some embodiments, the relevant description of the first signal may refer to the relevant description of the embodiment of FIG. 2A, which will not be repeated here.

In some embodiments, the first signal is used to trigger the communication between the first device and the second device.

There are many specific implementations of step S4103, and some optional modes are provided below.

### Mode 1

Step S4103 may also include:
the second device performing security protection on the first signal based on the second configuration, or the first signal is not securely protected; and
receiving first information returned by the first device upon its being triggered by the first signal.

In some embodiments, the first information is used for the security authentication between the first device and the second device.

Details on how to perform security authentication may refer to the embodiment of FIG. 2C, which will not be repeated here.

If the first signal is securely protected, security authentication of two-way transmission between the first device and the second device can be realized under the condition that the first information is securely protected.

### Mode 2

Step S4103 may also include:
if the first signal is not securely protected, receiving second information sent by the first device.

In some embodiments, the second information is securely protected.

In some embodiments, the second information is used for security authentication between the first device and the second device.

In some embodiments, the security authentication of the second information is performed based on the second configuration.

### Mode 3

Based on Mode 2, Step S4103 may also include:
sending a second signal.

In some embodiments, the second signal is securely protected.

In some embodiments, the second device performs secure protection on the second signal by using the second configuration.

Third information of the first device is received.

In some embodiments, the third information is securely protected.

The security authentication of the third information is performed based on the second configuration.

### Mode 4

If the first signal is not securely protected, fourth information is received.

In some embodiments, the fourth information requests a security authentication.

In some embodiments, the fourth information, which is sent by the first device upon being triggered by the first signal, is received.

The security authentication of the fourth information is performed based on the second configuration.

Upon the fourth information passing the security authentication, a third signal is sent.

In some embodiments, the third signal is securely protected or not securely protected.

Fifth information is received.

In some embodiments, the fifth information is information sent by the first device after the third signal passes the security authentication.

In other embodiments, if the third signal is not securely protected, the fifth information is information sent by the first device after receiving the third signal.

The security authentication is performed on the fifth information based on the second configuration.

It is noted that the second configuration, the first information to the fifth information and/or the way of security authentication in the embodiments of the disclosure can refer to the same parts of any of the aforementioned embodiments, which will not be repeated here.

Steps S4101 and S4102 may be optional steps in some examples. For example, when the second device is used as a relay node of the first device, it is pre-configured with the second configuration when the device leaves the factory, or it is pre-configured with the second configuration by other devices such as OAM devices. In this case, the second device does not need to request the second configuration from a first CN device and/or an application server.

As illustrated in FIG. 5, an embodiment of the disclosure provides a communication method. The method is performed by a first CN device, and includes the following steps.

At step S5101, a first request message is received.

In some embodiments, the first request message is used for requesting a second configuration.

In some embodiments, the first request message may include equipment information of a first device and/or equipment information of a second device.

In some embodiments, the first request message may also include a task identifier and/or a service code.

In conclusion, the first request message is used for the first CN device to determine the second configuration requested by the second device.

At step S5102, an authentication and authorization is performed on the second device.

The relevant description of the authentication and authorization of the first CN device to the second device may refer to the corresponding description of any embodiment in FIGS. 2A-2E.

At step S5103, upon the second device passing the authentication and authorization, the second configuration is sent to the second device.

In some embodiments, if the second device passes the authentication and authorization, a second response message carrying the second configuration is sent to the second device.

In some embodiments, if the second device fails the authentication and authorization, a rejection message is sent to the second device.

In some embodiments, the second configuration may be sent to the second device in a first response message.

In some embodiments, the second configuration may be a local configuration of the first CN device.

In other implementations, the second configuration may be a configuration requested by the first CN device from an application server.

In some embodiments, steps S5101 and S5102 are optional steps. For example, if the second device is an AN device or a relay node or an assisting node deployed by a communication operator, the second configuration is provided to the second device directly when it registers to a network, without having to request the second configuration through the first request message and without the need for authentication and authorization of a dedicated procedure device.

In other embodiments, step S5102 is an optional step. When the second device registers to the network, it needs to verify whether the second device is a legal device. If the second device is a legal device, it is considered that the second device passes the authentication and authorization. Or, if the second device is an AN device or a relay node or an assisting node deployed by a communication operator, after verifying that the second device is the AN device or the relay node or the assisting node deployed by the communication operator, it is considered that the authentication is passed. In this case, if the second device passes the authentication and authorization, the second configuration is returned to the second device without waiting for the first request message sent by the first device.

As illustrated in FIG. 6, an embodiment of the disclosure provides a communication method. The method is performed by an application server, and includes the following steps.

At step S6101, a request message is received.

The request message may include a first request message, a second request message or a third request message.

In some embodiments, if the request message is the first request message, the first request message comes from a second device and is used for the second device to request a second configuration.

In some embodiments, if the request message is the second request message, the second request message comes from a first CN device and is used for requesting authentication and authorization of the second device.

In some embodiments, if the request message is the third request message, the third request message also comes from the first CN device and is used to request the second configuration.

In some embodiments, the third request message may be sent after the first device passes the authentication and authorization on second device.

In some embodiments, the request message may include equipment information of the first device and/or equipment information of the second device.

In some embodiments, the request message may also include a task identifier and/or a service code.

The request message is used for the first CN device to determine the second configuration the second device requests.

At step S6102, an authentication and authorization is performed for the second device.

In some embodiments, upon receiving the second request message, the authentication and authorization is performed for the second device.

In some embodiments, upon receiving the first request message, the authentication and authorization is performed for the second device.

The relevant description of the authentication and authorization of the first CN device to the second device may refer to the corresponding description of any embodiment in FIGS. 2A- 2E.

In some embodiments, if the request message is the third request message, the application server does not need to perform the authentication and authorization for the second device.

At step S6103, the second configuration is sent to the second device.

In some embodiments, if the second device passes the authentication and authorization, a first response message carrying the second configuration is sent to the first device.

In some embodiments, if the second device fails the authentication and authorization, a first response message indicating that the authentication and authorization has failed is sent to the first device.

In some embodiments, upon the second device passing the authentication and authorization, a second response message carrying the second configuration is sent to a second CN device.

In some embodiments, upon the second device not passing the authentication and authorization, a second response message indicating that the authentication and authorization has failed is sent to the second CN device.

In some embodiments, a third response message carrying the second configuration is sent to the second CN device.

The second response message carrying the second configuration is sent to the second device.

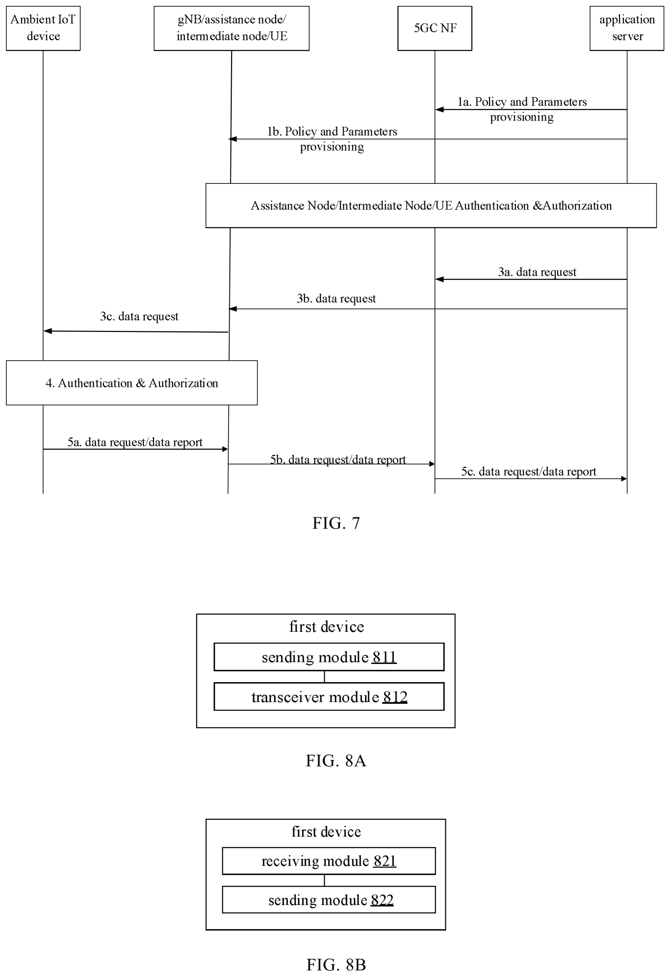

As illustrated in FIG. 7, an embodiment of the disclosure provides a method for managing ambient IoT devices to authenticate and authorize ambient IOT devices and to authenticate and authorize assistance nodes/intermediate nodes/UEs.

1a. The application server provides a policy and parameters for a core network function (Core NF). The parameters may be called secure parameters, which include security materials, service type, etc. The Core NF may include but is not limited to a policy control function (PCF). The policy and parameters may include the aforementioned first security information and/or second security information.

1b. The application server provides the policy and security parameters to assistance nodes/intermediate nodes/UEs.

Note: the security materials may be pre-configured in the ambient IoT devices. For example, the security information (e.g., long term credential), which forms the root of the security of ambient IoT communication, is pre-configured in the ambient IoT devices.

2. The assistance nodes/intermediate nodes/UEs performs authentication and authorization. After the authentication and authorization, the assistance nodes/intermediate nodes/UEs are provided with the policy and security parameters for communications with the ambient IoT devices.

Note: To check the authorization, the Core NF may interact with the application server or UDM.

3. The application server or the Core NF may request data from the ambient IoT devices. The data request is sent to the ambient IoT devices via gNBs/assistance nodes/intermediate nodes/UEs.

4. To establish a connection between the ambient IoT device and the gNB/assistance node/intermediate node/UE using a local interface e.g., PC5, WLAN or Bluetooth, authentication between the ambient IoT device and the gNB/assistance node/intermediate node/UE is performed using security mechanisms specific to the local interface.

The ambient IoT device uses its own ID and pre-configured long term credential to establish a secure link. During the authentication between the ambient IoT device and the gNB/assistance node/intermediate node/UE, the ambient IoT device may be authenticated by a network or the application server via the gNB/assistance node/intermediate node/UE.

After the secure link is established, the ambient IoT device may be authorized by the network or the application server for using services it requests via the gNB/assistance node/intermediate node/UE.

Note 1: Once the link is established, the ambient IoT device and the gNB/assistance node/intermediate node/UE stores a security context depending on the device type.

Note 2: The ambient IoT device and the gNB/assistance node/intermediate node/UE may also authenticate and authorize a group of ambient IoT devices.

5. If a data request is received by the ambient IoT device, it returns the requested data by sending a data response message to the Core NF or the application server. The ambient IoT device may periodically report the collected data. In this case, the ambient IoT device sends a data report to the 5GC NF or the application server.

For the ambient IoT device, the following schemes are provided.

The ambient IoT device should be pre-configured with security information to establish communication.

The ambient IoT device should be able to authenticate with the gNB/assistance node/intermediate node/UE.

After a connection between the ambient IoT device and the gNB/assistance node/intermediate node/UE is established, the ambient IoT device should be able to store the security context.

For the gNB/assistance node/intermediate node/UE,
the gNB/assistance node/intermediate node/UE needs to be authenticated and authorized by the 5GC before it communicate with the ambient IoT device.

The gNB/assistance node/intermediate node/UE provides the strategy and parameters for communications with the ambient IoT device.

The gNB/assistance node/intermediate node/UE should be able to authenticate and authorize the ambient IoT device.

The gNB/assistance node/intermediate node/UE should be able to store the security context after the connection between the ambient IoT device and the gNB/assistance node/intermediate node/UE.

For the 5GC NF/the application server,
the 5GC NF/the application server shall be able to authorize the gNB/assistance node/intermediate node/UE to communicate with the ambient IoT device.

The 5GC NF/the application server shall be able to provide the gNB/assistance node/intermediate node/UE with the policy and parameters so as to communicate with the ambient IoT device.

The embodiments of the disclosure provide an apparatus for implementing any of the above methods, and the apparatus includes units/modules for implementing steps performed by the terminal in any of the above methods. The embodiments of the disclosure also provide another apparatus including units/modules for implementing steps performed by the network device (e.g., AN device, CN device, etc.) in any of the above methods.

It should be understood that the above units/modules in the above apparatus are divided based on their logical functions, and some or all of the above units/modules may be integrated on a single physical entity or may be physically separated in practical applications. In addition, the units/modules in the above apparatus may be implemented by software called by a processor. For example, the apparatus includes a processor connected to a memory. The memory stores instructions, and the processor calls the instructions stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. The units/modules in the apparatus may be implemented in the form of a hardware circuit. The functions of some or all of the units/modules may be achieved through the design of the hardware circuit. The hardware circuit may be understood as one or more processors. For example, in an implementation, the hardware circuit is an application-specific integrated circuit (ASIC). Some or all of the functions of the units/modules are achieved through the design of logical relationships between components in the circuit. As another example, in another implementation, the hardware circuit may be implemented through a programmable logic device (PLD). Taking a field programmable gate array (FPGA) as an example, a large number of logical gates are included in the FPGA, and their connection relationships are configured through a configuration file, thereby implementing some or all of the functions of the above units/modules. All the units/modules of the above apparatus may be implemented entirely through software called by the processor, or entirely through the hardware circuit, or partially through software called by the processor and partially through the hardware circuit.

In the embodiments of the disclosure, the processor is a circuit having signal processing capabilities. In an implementation, the processor may be a circuit having instruction reading and executing capabilities, such as a CPU, a micro-processor, a graphics processing unit (GPU) (which is understood as a micro-processor), or a digital signal processor (DSP). In another implementation, the processor implements certain functions through a logical relationship of the hardware circuit. The relationship may be fixed or re-configurable. For example, the processor may be a hardware circuit implemented by an ASIC or a PLD, such as an FPGA. In a re-configurable hardware circuit, the procedure for the processor to load the configuration file to configure the hardware circuit is understood as a procedure for the processor to load instructions to implement some or all of the functions of the above units/modules. In addition, the processor may also be an artificial intelligence (AI)-designed hardware circuit, which is understood as a type of ASIC, such as a neural network processing unit (NPU), a tensor processing unit (TPU) and a deep learning processing unit (DPU).

FIG. 8A is a schematic structural diagram of a first device provided by an embodiment of the disclosure. As illustrated in FIG. 8A, the first device provided by an embodiment of the disclosure includes: a receiving module 811, configured to receive a first signal from a second device; and a transceiver module 812, configured to, upon being triggered by the first signal, performing a secure communication with the second device based on a first configuration.

Optionally, the receiving module is configured to execute steps related to information reception performed by the terminal in any of the above communication methods, which will not be repeated herein. The above sending module is used for executing steps related to sending performed by the terminal in any of the above communication methods implemented by the first device, which will not be repeated herein.

In some embodiments, the first device further includes one or more processing modules, and the processing module is used for information processing.

FIG. 8B is a schematic structural diagram of a second device provided by an embodiment of the disclosure. As illustrated in FIG. 8B, the second device provided by an embodiment of the disclosure includes: a receiving module 821, configured to receive a second configuration, in which the second configuration is used for a secure communication between the second device and a first device; and a sending module 822, configured to send a first signal to the first device, in which the first signal is used to for triggering the first device to communicate with the second device.

The receiving module and the sending module of the second device are used for executing any step related to sending and receiving in the communication method implemented by the second device.

In some embodiments, the second device may further include one or more processing modules, and the processing module is configured to implement any step related to information processing.

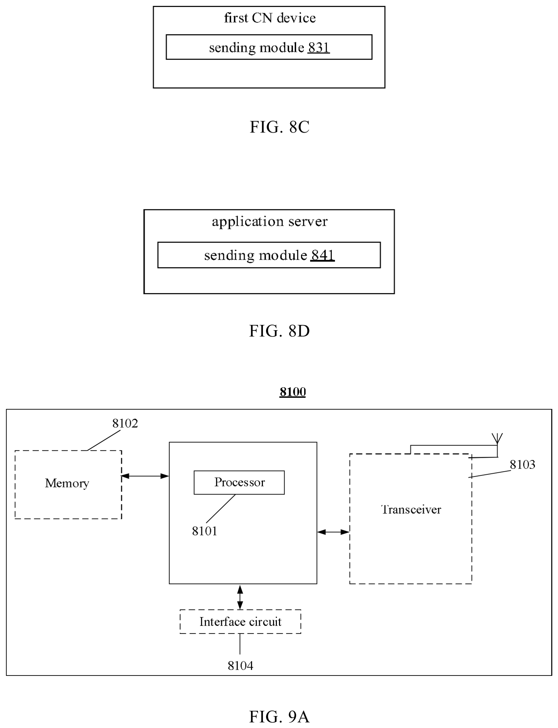

FIG. 8C is a schematic structural diagram of a first core network device provided by an embodiment of the disclosure. As illustrated in FIG. 8C, the first core network device provided by an embodiment of the disclosure includes: a sending module 831, configured to send a second configuration to a second device, in which the second configuration is used for a secure communication between the second device and a first device, and the first device is triggered to communicate by a signal from the second device.

Optionally, the sending module is used for executing steps related to information transmission performed by the terminal in any of the above communication methods implemented by the second core network device, which will not be repeated herein.

In some embodiments, the second core network device may further include one or more processing modules, and the processing module is used for information processing.

In some embodiments, the second core network device may further include one or more receiving modules for processing receiving steps performed by the second device.

FIG. 8D is a schematic structural diagram of an application server provided by an embodiment of the disclosure. As illustrated in FIG. 8D, the application server provided by an embodiment of the disclosure includes: a sending module 841, configured to send a second configuration to a second device or a core network device, in which the second configuration is used for a secure communication between the second device and a first device, and the first device is triggered to communicate by a signal from the second device.

Optionally, the sending module is used for executing steps related to information transmission performed by the terminal in any of the above communication methods implemented by the application server, which will not be repeated herein.

In some embodiments, the application server may further include one or more processing modules, and the processing module is used for information processing.

In some embodiments, the application server may further include one or more receiving modules for processing receiving steps performed by the second device.

FIG. 9A is a schematic structural diagram of a communication device 8100 provided by an embodiment of the disclosure. The communication device 8100 may be a network device (e.g., an AN device or a core network device), a terminal (e.g., UE), a chip, a chip system or a processor that supports the network device to implement any of the above methods, or a chip, a chip system or a processor that supports the terminal to implement any of the above communication methods. The communication device 8100 is used to implement the communication method described in the above method embodiments, which can refer to the descriptions in the above method embodiments.

As illustrated in FIG. 9A, the communication device 8100 includes one or more processors 8101. The processor 8101 may be a general-purpose processor or a dedicated processor, such as a baseband processor or a central processor. The baseband processor is used to process communication protocols and communication data, while the central processor is used to control the communication device (e.g., a BS, a baseband chip, a terminal, a terminal chip, a DU or a CU), execute programs, and process data of the programs. The communication device 8100 is used to call instructions to cause the communication device 8100 to implement any of the above communication methods.

In some embodiments, the communication device 8100 further includes one or more memories 8102 for storing instructions. Optionally, all or part of the memories 8102 may be external to the communication device 8100.

In some embodiments, the communication device 8100 further includes one or more transceivers 8103. When the communication device 8100 includes one or more transceivers 8103, the transceiver 8103 performs the communication steps such as sending and/or receiving in the above method, and other steps are performed by the processor 8101.

In some embodiments, the transceiver may include a receiver and a transmitter. The receiver and the transmitter may be separated or integrated together. Optionally, the terms "transceiver", "transceiver unit", "transceiver machine" and "transceiver circuit" are interchangeable, and the terms "transmitter", "transmitting unit", "transmitter machine" and "transmitting circuit" are also interchangeable. In addition, the terms "receiver", "receiving unit", "receiver machine" and "receiving circuit" are interchangeable.

Optionally, the communication device 8100 includes one or more interface circuits 8104. The interface circuits 8104 are connected to the memories 8102. The interface circuits 8104 are used to receive signals from the memories 8102 or other devices and send signals to the memories 8102 or other devices. For example, the interface circuits 8104 read instructions stored in the memories 8102 and send the instructions to the processors 8101.

The communication device 8100 described in the embodiments may be a network device or a terminal. However, the scope of the communication device 8100 is not limited in the disclosure, and the structure of the communication device 8100 is not limited by FIG. 9A. The communication device may be a standalone device or part of a larger device. For example, the communication device may be: (1) a standalone integrated circuit (IC), a chip, a chip system or a sub-system; (2) a collection of one or more ICs (optionally, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

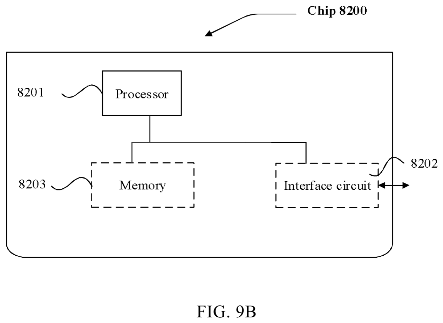

FIG. 9B is a schematic structural diagram of a chip 8200 provided by an embodiment of the disclosure. The case that the communication device 8100 is a chip or a chip system can refer to the schematic structural diagram of the chip 8200 shown in FIG. 9B, which is not limited herein.

The chip 8200 includes one or more processors 8201, and the processor 8201 is used to call instructions to cause the chip 8200 to implement any of the above methods.

In some embodiments, the chip 8200 includes one or more interface circuits 8202. The interface circuits 8202 are connected to one or more memories 8203. The interface circuits 8202 are used to receive signals from the memories 8203 or other devices and send signals to the memories 8203 or other devices. For example, the interface circuits 8202 read instructions stored in the memories 8203 and send the instructions to the processors 8201. Optionally, terms "interface circuit", "interface", "transceiver pin", "transceiver machine", etc. are interchangeable.

In some embodiments, the chip 8200 further includes the one or more memories 8203 for storing instructions. Optionally, all or part of the memories 8203 are external to the chip 8200.

The disclosure also provides a storage medium. The storage medium stores instructions, and when the instructions are executed by the communication device 8100, the communication device 8100 is caused to implement any of the above methods. Optionally, the storage medium is an electronic storage medium. Optionally, the storage medium may be a computer-readable storage medium or a storage medium readable by other devices. Optionally, the storage medium may be a non-transitory storage medium or a transitory storage medium.

The disclosure also provides a program product. When the program product is executed by the communication device 8100, the communication device 8100 is caused to implement any of the above communication methods. Optionally, the program product is a computer program product.

The disclosure also provides a computer program. When the computer program is executed by a computer, the computer is caused to implement any of the above communication methods.

Other implementations of the embodiments of the disclosure will be apparent to those skilled in the art from consideration of the specification and practice of the disclosure disclosed here. The disclosure is intended to cover any variations, uses or adaptations of the disclosure following the general principles thereof and including such departures from the disclosure as come within known or customary practice in the art. It is intended that the specification and embodiments be considered as illustrative only, with the true scope and spirit of the embodiments of the disclosure being indicated by the attached claims.

It is noted that the embodiments of the disclosure are not limited to the exact construction that has been described above and illustrated in the accompanying drawings, and that various modifications and changes can be made without departing from the scope thereof. It is intended that the scope of the embodiments of the disclosure only be limited by the attached claims.

## Claims

**1.** A communication method, comprising:
receiving, by a first device, a first signal from a second device; and
upon being triggered by the first signal, performing a secure communication with the second device based on a first configuration.

**2.** The method of claim 1, wherein the first configuration comprises first security information, and the first security information comprises a first key.

**3.** The method of claim 2, wherein upon being triggered by the first signal, performing the secure communication with the second device based on the first configuration comprises:
upon being triggered by the first signal, performing the secure communication with the second device based on the first key included in the security information;
or
upon being triggered by the first signal, generating a second key based on the first key, and performing the secure communication with the second device based on the second key.

**4.** The method of any one of claims 1-3, wherein the first signal is securely protected, and performing the secure communication with the second device based on the first configuration comprises:
performing a security authentication on the first signal based on the first configuration; and
upon the first signal passing the security authentication, sending first information securely-protected to the second device based on the first configuration, wherein the first information is used for a security authentication between the second device and the first device.

**5.** The method of any one of claims 1-3, wherein the first signal is not securely protected, and performing the secure communication with the second device based on the first configuration comprises:
upon being triggered by the first signal, sending second information securely-protected to the second device based on the first configuration, wherein the second information is used for a security authentication between the second device and the first device.

**6.** The method of claim 5, wherein performing the secure communication with the second device based on the first configuration comprises:
receiving a second signal, wherein the second device is securely authenticated, and the second signal is securely protected;
performing a security authentication on the second signal based on the first configuration; and
upon the second signal passing the security authentication, sending third information securely-protected based on the first configuration.

**7.** The method of any one of claims 1-3, wherein performing the secure communication with the second device based on the first configuration comprises:
upon being triggered by the first signal, sending fourth information, wherein the fourth information is used for requesting a security authentication;
receiving a third signal sent by the second device, wherein the third signal is securely protected;
performing the security authentication on the third signal based on the first configuration; and
upon the third signal passing the security authentication, sending fifth information securely-protected to the second device based on the first configuration.

**8.** The method of claim 2, wherein the first key comprises at least one of:
an integrity key for integrity protection;
a confidentiality key for confidentiality protection;
a scrambling key for scrambling protection; or
a password for encoding protection.

**9.** A communication method, comprising:
receiving, by a second device, a second configuration, wherein the second configuration is used for a secure communication between the second device and a first device; and
sending a first signal to the first device, wherein the first signal is used for triggering the first device to communicate with the second device.

**10.** The method of claim 9, wherein receiving, by the second device, the second configuration comprises:
receiving the second configuration from an application server;
or
receiving the second configuration from a core network device.

**11.** The method of claim 10, further comprising:
sending a first request message to the application server or the core network device, wherein the first request message is used for requesting the second configuration;
receiving, by the second device, the second configuration comprising:
receiving a first response message comprising the second configuration from the application server or the core network device, wherein the second device is authenticated and authorized by the application server or the core network device.

**12.** The method of any one of claims 9-11, wherein the second configuration at least comprises second security information, and the second security information comprises a third key.

**13.** The method of claim 12, further comprising:
performing a secure communication with the second device using the third key.

**14.** The method of claim 12, further comprising:
generating a fourth key based on the third key; and
performing a secure communication with the second device using the fourth key.

**15.** The method of any one of claims 9-14, wherein the first signal is securely protected for a security authentication between the first device and the second device, and the method further comprises:
receiving first information returned from the first device upon its being triggered by the first signal;
wherein the first information is securely protected and is securely authenticated based on the second configuration.

**16.** The method of any one of claims 9-14, wherein the first signal is not securely protected, and the method further comprises:
receiving second information from the second device upon its being triggered by the first signal;
wherein the second information is securely protected and is securely authenticated based on the second configuration.

**17.** The method of claim 16, further comprising:
sending a second signal, wherein the second signal is securely protected and is for a security authentication between the first device and the second device;
upon the second signal passing the security authentication, sending third information securely-protected from the second device upon its being triggered by the second signal.

**18.** The method of any one of claims 9-14, wherein the first signal is not securely protected, and the method further comprises:
receiving fourth information from the second device upon its being triggered by the first signal, wherein the fourth information is used for requesting a security authentication;
sending a third signal based on the fourth information, wherein the third signal is securely protected; and
upon the third signal passing the securely authentication, receiving fifth information from the second device upon its being triggered by the third signal.

**19.** A communication method, comprising:
sending, by a first core network device, a second configuration to a second device, wherein the second configuration is used for a secure communication between the second device and a first device, and the first device is triggered to communicate by a signal from the second device.

**20.** The method of claim 19, further comprising:
performing an authentication and authorization on the second device;
sending the second configuration to the second device comprising:
upon the second device passing the authentication and authorization, sending the second configuration to the second device.

**21.** The method of claim 20, wherein performing the authentication and authorization on the second device comprises:
sending a second request message to a second core network device or an application server, wherein the second request message is used to request the second core network device or the application server to perform the authentication and authorization on the second device;
receiving a second response message returned based on the second request message; and
determining whether the second device passes the authentication and authorization based on the second response message.

**22.** The method of claim 21, wherein the second device is authenticated and authorized by the application server, and the second response message further comprises the second configuration.

**23.** The method of any one of claims 19-22, further comprising:
receiving a first request message, wherein the first request message is used for requesting the second configuration;
sending, by the first core network device, the second configuration to the second device comprising:
sending a first response message comprising the second configuration to the second device.

**24.** The method of any one of claims 19-23, wherein the second configuration at least comprises a third key of second security information.

**25.** The method of any one of claims 19-21, further comprising:
sending a third request message to an application server, wherein the third request message is used for requesting the second configuration; and
receiving a third response message returned by the application server, wherein the third response message comprises the second configuration.

**26.** A communication method, comprising:
sending, by an application server, a second configuration to a second device or a core network device, wherein the second configuration is used for a secure communication between the second device and a first device, and the first device is triggered to communicate by a signal from the second device.

**27.** The method of claim 26, wherein sending, by the application server, the second configuration to the second device comprises:
upon the second device passing an authentication and authorization, sending the second configuration to the second device.

**28.** The method of claim 26, further comprising:
receiving a first request message sent by the second device, wherein the first request message is used for requesting the second configuration;
sending, by the application server, the second configuration to the second device or the core network device comprising:
sending a first response message comprising the second configuration to the second device.

**29.** The method of claim 26, further comprising:
receiving a third request message sent by the core network device, wherein the third request message is used for requesting the second configuration; and
sending a third response message to the core network device, wherein the third response message comprises the second configuration.

**30.** The method of claim 26, further comprising:
receiving a second request message sent by the core network device, wherein the second request message is at least used for an authentication and authorization on the second device; and
upon the second device passing the authentication and authorization, sending a second response message to the core network device, wherein the second response message comprises the second configuration.

**31.** A communication method, comprising:
performing, by a first device, the communication method of any one of claims 1-8;
performing, by a second device, the communication method of any one of claims 9-18;
performing, by a first core network device, the communication method of any one of claims 19-25; and
performing, by an application server, the communication method of any one of claims 26-30.

**32.** A first device, comprising:
a receiving module, configured to receive a first signal from a second device; and
a transceiver module, configured to, upon being triggered by the first signal, perform a secure communication with the second device based on a first configuration.

**33.** A second device, comprising:
a receiving module, configured to receive a second configuration, wherein the second configuration is used for a secure communication between the second device and a first device; and
a sending module, configured to send a first signal to the first device, wherein the first signal is used for triggering the first device to communicate with the second device.

**34.** A first core network device, comprising:
a sending module, configured to send a second configuration to a second device, wherein the second configuration is used for a secure communication between the second device and a first device, and the first device is triggered to communicate by a signal from the second device.

**36.** An application server, comprising:
a sending module, configured to send a second configuration to a second device or a core network device, wherein the second configuration is used for a secure communication between the second device and a first device, and the first device is triggered to communicate by a signal from the second device.

**37.** A communication system, comprising:
a first device, configured to implement the communication method of any one of claims 1-8;
a second device, configured to implement the communication method of any one of claims 9-18;
a first core network device, configured to implement the communication method of any one of claims 19-25; and
an application server, configured to implement the communication method of any one of claims 26-30.

**38.** A communication device, comprising:
one or more processors;
wherein the one or more processors are configured to call instructions to cause the communication device to implement the communication method of any one of claims 1-8, the communication method of any one of claims 9-18, the communication method of any one of claims 19-25, or the communication method of any one of claims 26-30.

**39.** A storage medium, wherein the storage medium stores instructions, and when the instructions are executed by a communication device, the communication device is caused to implement the communication method of any one of claims 1-8, the communication method of any one of claims 9-18, the communication method of any one of claims 19-25, or the communication method of any one of claims 26-30.
